# EUROPEAN PATENT APPLICATION

(11) **EP 4 411 929 A1**
(43) Date of publication of application: **07.08.2024**
(21) Application number: 22875516.1
(22) Date of filing: 28.06.2022
(51) Int. Cl.: H01M 10/0585, H01M 10/052, H01M 10/0562, H01M 50/103, H01M 50/54, H01M 50/548, H01M 50/55

(54) **BATTERY AND METHOD FOR PRODUCING BATTERY**

(30) Priority: 28.09.2021 JP 2021158530
(71) Applicant: Panasonic Intellectual Property Management Co., Ltd., Kadoma-shi, Osaka 571-0057 (JP)
(72) Inventor: HONDA, Kazuyoshi, Kadoma-shi, Osaka 571-0057 (JP); HIRANO, Koichi, Kadoma-shi, Osaka 571-0057 (JP); KOGA, Eiichi, Kadoma-shi, Osaka 571-0057 (JP); MORIOKA, Kazuhiro, Kadoma-shi, Osaka 571-0057 (JP); KAWASE, Akira, Kadoma-shi, Osaka 571-0057 (JP)
(74) Representative: Grünecker Patent- und Rechtsanwälte PartG mbB
(86) International application number: PCT/JP2022/025772
(87) International publication number: WO 2023/053637

(57) **Abstract**

A battery according to an aspect of the present disclosure includes a power-generating element including a plurality of battery cells each including an electrode layer, a counter-electrode layer, and a solid electrolyte layer located between the electrode layer and the counter-electrode layer, the plurality of battery cells being electrically connected in parallel and laminated, an electrode insulating member covering the electrode layer on each of a plurality of first side surfaces of the power-generating element, a plurality of counter-electrode leads, electrically connected to the counter-electrode layer, each of which covers a first region of a corresponding one of the plurality of first side surfaces excluding both ends in a direction orthogonal to a direction of laminating and the electrode insulating member, and a counter-electrode conductor that connects the plurality of counter-electrode leads.

## Description

### Technical Field

The present disclosure relates to a battery and a method for manufacturing a battery.

### Background Art

There have conventionally been known batteries in each of which a plurality of battery cells connected in series are connected in parallel to one another (see, for example, PTL 1 and PTL 2).

### Citation List

### Patent Literature

PTL 1: Japanese Unexamined Patent Application Publication No. 2013-120717
PTL 2: Japanese Unexamined Patent Application Publication No. 2008-198492

### Summary of Invention

### Technical Problem

There has been demand for further improvement in battery characteristic of the conventional batteries.

To address this problem, the present disclosure provides a high-performance battery and a method for manufacturing the same.

### Solution to Problem

A battery according to an aspect of the present disclosure includes a power-generating element including a plurality of battery cells each including an electrode layer, a counter-electrode layer, and a solid electrolyte layer located between the electrode layer and the counter-electrode layer, the plurality of battery cells being electrically connected in parallel and laminated, an electrode insulating member covering the electrode layer on each of a plurality of first side surfaces of the power-generating element, a plurality of counter-electrode leads, electrically connected to the counter-electrode layer, each of which covers a first region of a corresponding one of the plurality of first side surfaces excluding both ends in a direction orthogonal to a direction of laminating and the electrode insulating member, and a counter-electrode conductor that connects the plurality of counter-electrode leads.

A method for manufacturing a battery according to an aspect of the present disclosure includes the steps of preparing a plurality of battery cells each including an electrode layer, a counter-electrode layer, and a solid electrolyte layer located between the electrode layer and the counter-electrode layer, forming a layered product by laminating the plurality of battery cells in sequence so that an order of arrangement of the electrode layer, the counter-electrode layer, and the solid electrolyte layer of every one of the plurality of battery cells and an order of arrangement of the electrode layer, the counter-electrode layer, and the solid electrolyte layer of another of the plurality of battery cells alternate, covering the electrode layer with an electrode insulating member on each of the plurality of first side surfaces of the layered product, covering, with each of a plurality of counter-electrode leads electrically connected to the counter-electrode layer, a first region of a corresponding one of the plurality of first side surfaces excluding both ends in a direction orthogonal to a direction of laminating and the electrode insulating member, and providing a counter-electrode conductor that connects the plurality of counter-electrode leads.

### Advantageous Effects of Invention

The present disclosure makes it possible to provide a high-performance battery and a method for manufacturing the same.

### Brief Description of Drawings

[Fig. 1A] Fig. 1A is a cross-sectional view of a battery according to Embodiment 1.
[Fig. 1B] Fig. 1B is a cross-sectional view of the battery according to Embodiment 1.
[Fig. 1C] Fig. 1C is a cross-sectional view of the battery according to Embodiment 1.
[Fig. 2] Fig. 2 is a top view of the battery according to Embodiment 1.
[Fig. 3A] Fig. 3A is a cross-sectional view of an example of a battery cell included in a power-generating element according to Embodiment 1.
[Fig. 3B] Fig. 3B is a cross-sectional view of another example of a battery cell included in the power-generating element according to Embodiment 1.
[Fig. 3C] Fig. 3C is a cross-sectional view of another example of a battery cell included in the power-generating element according to Embodiment 1.
[Fig. 4] Fig. 4 is a cross-sectional view of the power-generating element according to Embodiment 1.
[Fig. 5] Fig. 5 is a side view of the battery according to Embodiment 1.
[Fig. 6] Fig. 6 is a side view of the battery according to Embodiment 1.
[Fig. 7] Fig. 7 is a top view of a battery according to Embodiment 2.
[Fig. 8] Fig. 8 is a side view of the battery according to Embodiment 2.
[Fig. 9] Fig. 9 is a side view of the battery according to Embodiment 2.
[Fig. 10] Fig. 10 is a top view of a battery according to Embodiment 3.
[Fig. 11] Fig. 11 is a bottom view of the battery according to Embodiment 3.
[Fig. 12] Fig. 12 is a top view of a battery according to Embodiment 4.
[Fig. 13] Fig. 13 is a cross-sectional view of a battery according to Embodiment 5.
[Fig. 14] Fig. 14 is a cross-sectional view of a battery according to Embodiment 6.
[Fig. 15] Fig. 15 is a side view of the battery according to Embodiment 6.
[Fig. 16] Fig. 16 is a side view of the battery according to Embodiment 6.
[Fig. 17A] Fig. 17A is a cross-sectional view of a battery according to Embodiment 7.
[Fig. 17B] Fig. 17B is a cross-sectional view of the battery according to Embodiment 7.
[Fig. 17C] Fig. 17C is a cross-sectional view of the battery according to Embodiment 7.
[Fig. 18] Fig. 18 is a cross-sectional view of a battery according to another example of Embodiment 7.
[Fig. 19] Fig. 19 is a cross-sectional view of a battery according to Embodiment 8.
[Fig. 20] Fig. 20 is a cross-sectional view of a battery according to Embodiment 9.
[Fig. 21] Fig. 21 is a cross-sectional view of a battery according to Embodiment 10.
[Fig. 22] Fig. 22 is a flow chart showing a method for manufacturing a battery according to each embodiment.

### Description of Embodiments

### (Brief Overview of the Present Disclosure)

A battery according to an aspect of the present disclosure includes a power-generating element including a plurality of battery cells each including an electrode layer, a counter-electrode layer, and a solid electrolyte layer located between the electrode layer and the counter-electrode layer, the plurality of battery cells being electrically connected in parallel and laminated, an electrode insulating member covering the electrode layer on each of a plurality of first side surfaces of the power-generating element, a plurality of counter-electrode leads, electrically connected to the counter-electrode layer, each of which covers a first region of a corresponding one of the plurality of first side surfaces excluding both ends in a direction orthogonal to a direction of laminating and the electrode insulating member, and a counter-electrode conductor that connects the plurality of counter-electrode leads.

This makes it possible to achieve a high-performance battery. For example, this makes it possible to achieve a battery that is superior in large-current characteristic and reliability.

Specifically, this makes it possible to increase current flow pathways, as the counter-electrode leads are provided separately for each of the first side surfaces of the power-generating element and the plurality of counter-electrode leads are connected by the counter-electrode conductor. More specifically, this makes it possible to increase the cross-sectional area of each of the counter-electrode leads orthogonal to a direction of flow of an electric current, thus making it possible to decrease the resistance of the counter-electrode leads and enhance large-current characteristics.

Further, the counter-electrode leads can be brought into close contact with the first side surfaces and the electrode insulating member, so that the volume of a portion involved in current extraction can be reduced. This makes it possible to increase the energy density of the battery.

Further, ends of the first side surfaces of the power-generating element in a direction orthogonal to the direction of laminating, i.e. corner portions of the power-generating element, are portions in which the risk of a short circuit is high. Further, the corner portions of the power-generating element are also portions in which a collapse tends to occur due to mechanical or thermal impact during use of the battery. In the battery according to the present aspect, the counter-electrode leads are provided except for such portions in which there is a risk of a short circuit or other failures. This makes it possible to enhance the reliability of the battery.

Further, the provision of the electrode insulating member on the side surfaces of the power-generating element makes it possible to reduce the occurrence of a short circuit between the electrode layer and the counter-electrode layer. Further, for example, electrically connecting all of the battery cells in parallel makes it possible to inhibit a particular battery cell from becoming overcharged or overdischarged due to variations in the capacity of the battery cells. In this way, the reliability of the battery can be enhanced.

Further, for example, the counter-electrode conductor may be provided at a first principal surface of the power-generating element.

Thus, the provision of the counter-electrode conductor at the principal surface makes it unnecessary to use the corner portions of the power-generating element, thus making it possible to enhance the reliability of a connection between the counter-electrode leads.

Further, for example, the battery according to the aspect of the present disclosure may further include a first insulating layer disposed between the counter-electrode conductor and the first principal surface.

This makes it possible to ensure insulation between the counter-electrode conductor and the first principal surface of the power-generating element.

Further, for example, the battery according to the aspect of the present disclosure may further include a counter-electrode insulating member covering the counter-electrode layer on each of a plurality of second side surfaces of the power-generating element, a plurality of electrode leads, electrically connected to the electrode layer, each of which covers a second region of a corresponding one of the plurality of second side surfaces excluding both ends in a direction orthogonal to the direction of laminating and the counter-electrode insulating member, and an electrode conductor that connects the plurality of electrode leads.

This makes it possible to increase current flow pathways, as the electrode leads are provided separately for each of the second side surfaces of the power-generating element and the plurality of electrode leads are connected by the electrode conductor. More specifically, this makes it possible to increase the cross-sectional area of each of the electrode leads orthogonal to the direction of flow of an electric current, thus making it possible to decrease the resistance of the electrode leads and enhance large-current characteristics.

Further, the counter-electrode leads can be brought into close contact with the second side surfaces and the electrode insulating member, so that the volume of a portion involved in current extraction can be reduced. This makes it possible to increase the energy density of the battery. Further, since the electrode leads are provided except for corner portions in which there is a risk of a short circuit or other failures, the reliability of the battery can be enhanced.

Further, for example, the counter-electrode conductor and the electrode conductor may be provided at an identical principal surface of the power-generating element.

This makes it possible, for example, to form the electrode conductor and the counter-electrode conductor in the same step.

Further, for example, the counter-electrode conductor and the electrode conductor may each be provided at both two principal surfaces of the power-generating element.

Thus, the areas of the electrode conductor and the counter-electrode conductor can be increased. This makes it possible to decrease the resistance of each of the counter-electrode and electrode conductors, making it possible to enhance large-current characteristics.

Further, for example, the counter-electrode conductor may be provided at a first principal surface of the power-generating element, and the electrode conductor may be provided at a second principal surface of the power-generating element opposite to the first principal surface.

This makes it possible to place the electrode conductor and the counter-electrode conductor away from each other, thus making it possible to reduce the occurrence of a short circuit. Further, the areas of the electrode conductor and the counter-electrode conductor can be increased. This makes it possible to decrease the resistance of each of the counter-electrode and electrode conductors, making it possible to enhance large-current characteristics.

Further, for example, the plurality of first side surfaces and the plurality of second side surfaces may be alternately arranged along a circumferential direction of the power-generating element.

This makes it possible to place the electrode leads and the counter-electrode leads away from each other, thus making it possible to reduce the occurrence of a short circuit.

Further, for example, the battery according to the aspect of the present disclosure may further include a second insulating layer disposed between the electrode conductor and the power-generating element.

This makes it possible to ensure insulation between the electrode conductor and a principal surface of the power-generating element.

Further, for example, the plurality of first side surfaces may be side surfaces adjacent to each other.

This makes it possible to place the plurality of counter-electrode leads close to each other, thus making it possible to shorten the counter-electrode conductor that connects the plurality of counter-electrode leads, so that a reduction in resistance is attained.

Further, for example, the battery according to the aspect of the present disclosure may further include an end insulating member covering both ends of each of the plurality of first side surfaces in a direction orthogonal to the direction of laminating.

This makes it possible to reduce the risk of a short circuit or a collapse by covering the corner portions of the power-generating element with the electrode insulating member.

Further, for example, the plurality of first side surfaces may be side surfaces adjacent to each other, and the battery further comprises an end insulating member covering connected portions of the first side surfaces adjacent to each other. The electrode insulating member further may cover both ends of each of the plurality of first side surfaces in a direction orthogonal to the direction of laminating, and the counter-electrode conductor may cover the end insulating member.

This makes it possible to connect the plurality of counter-electrode leads through the counter-electrode conductor, which is provided so as to wrap around corner portions of the power-generating element while protecting the corner portions.

Further, for example, the battery according to the aspect of the present disclosure may further include a counter-electrode collector terminal disposed at the plurality of first side surfaces and connected to each of the counter-electrode leads.

Thus, the counter-electrode collector terminal can be made of a material that is different in property from that of which the counter-electrode leads are made. For example, as the material of which the counter-electrode leads are made, a material can be selected with a focus on having high conductivity, alloying with metal contained in a collector, or other properties. As the material of which the counter-electrode collector terminal is made, a material can be selected with a focus on flexibility, impact resistance, chemical stability, cost, construction spreadability, or other properties. In this way, a suitable material can be selected for each member. This makes it possible to bring about improvement in performance of the battery and enhance the manufacturability of the battery.

Further, for example, the counter-electrode layer may include a counter-electrode collector and a counter-electrode active material layer located between the counter-electrode collector and the solid electrolyte layer. At the plurality of first side surfaces, the counter-electrode collector may project further than the counter-electrode active material layer, and each of the counter-electrode leads may make contact with a principal surface of the counter-electrode collector.

Thus, in the projecting portion of the counter-electrode collector, the counter-electrode lead makes contact with not only an end face but also the principal surface of the counter-electrode collector. This causes an increase in area of contact between the counter-electrode lead and the counter-electrode collector, thus causing a decrease in resistance of connection between the counter-electrode lead and the counter-electrode collector and bringing about improvement in large-current characteristic. For example, this makes fast charging of the battery possible.

Further, for example, the electrode insulating member may cover the electrode layer of each of the plurality of battery cells on the plurality of first side surfaces, and each of the counter-electrode leads may be electrically connected to the counter-electrode layer of each of the plurality of battery cells.

This makes it possible to use the counter-electrode leads for connecting the plurality of battery cells in parallel. The counter-electrode leads can be brought into close contact with the first side surfaces and the electrode insulating member, so that the volume of a portion involved in parallel connection can be reduced. This makes it possible to increase the energy density of the battery.

Further, for example, the electrode insulating member may have a striped shape in a planar view of one of the plurality of first side surfaces.

Thus, an end face of the electrode layer exposed in a striped shape at a first side surface can be effectively covered with a striped electrode insulating member.

Further, for example, each of the counter-electrode leads may include a first conductive member that makes contact with the counter-electrode layer and a second conductive member covering the first conductive member.

Thus, each of the counter-electrode leads can be made of a plurality of different materials that are different in property from each other. For example, as the material of which the first conductive member, which makes contact with the counter-electrode layer, is made, a material can be selected with a focus on having high conductivity, alloying with metal contained in a collector, or other properties. As the material of which the second conductive member is made, a material can be selected with a focus on flexibility, impact resistance, chemical stability, cost, construction spreadability, or other properties. In this way, a suitable material can be selected for each member. This makes it possible to bring about improvement in performance of the battery and enhance the manufacturability of the battery.

Further, for example, the electrode insulating member may contain resin.

This makes it possible to increase impact resistance of the battery. This also makes it possible to relax stress that is applied to the battery due to changes in temperature of the battery or due to expansion and contraction of the battery during charging and discharging.

Further, for example, the battery according to the aspect of the present disclosure may further include a sealing member that exposes at least part of each of the counter-electrode leads and seals the power-generating element.

This makes it possible to protect the power-generating element, for example, from outside air and water, thus making it possible to further enhance the reliability of the battery.

Further, a method for manufacturing a battery according to an aspect of the present disclosure includes the steps of preparing a plurality of battery cells each including an electrode layer, a counter-electrode layer, and a solid electrolyte layer located between the electrode layer and the counter-electrode layer, forming a layered product by laminating the plurality of battery cells in sequence so that an order of arrangement of the electrode layer, the counter-electrode layer, and the solid electrolyte layer of every one of the plurality of battery cells and an order of arrangement of the electrode layer, the counter-electrode layer, and the solid electrolyte layer of another of the plurality of battery cells alternate, covering the electrode layer with an electrode insulating member on each of the plurality of first side surfaces of the layered product, covering, with each of a plurality of counter-electrode leads electrically connected to the counter-electrode layer, a first region of a corresponding one of the plurality of first side surfaces excluding both ends in a direction orthogonal to a direction of laminating and the electrode insulating member, and providing a counter-electrode conductor that connects the plurality of counter-electrode leads.

This makes it possible to manufacture the aforementioned high-performance battery.

The following describes embodiments in concrete terms with reference to the drawings.

It should be noted that the embodiments to be described below each illustrate a comprehensive and specific example. The numerical values, shapes, materials, constituent elements, placement and topology of constituent elements, steps, orders of steps, or other features that are shown in the following embodiments are just a few examples and are not intended to limit the present disclosure. Further, those of the constituent elements in the following embodiments which are not recited in an independent claim are described as optional constituent elements.

The following describes embodiments in concrete terms with reference to the drawings.

It should be noted that the embodiments to be described below each illustrate a comprehensive and specific example. The numerical values, shapes, materials, constituent elements, placement and topology of constituent elements, steps, orders of steps, or other features that are shown in the following embodiments are just a few examples and are not intended to limit the present disclosure. Further, those of the constituent elements in the following embodiments which are not recited in an independent claim are described as optional constituent elements.

Further, the drawings are schematic views, and are not necessarily strict illustrations. Accordingly, for example, the drawings are not necessarily to scale. Further, in the drawings, substantially identical components are given identical reference signs, and a repeated description may be omitted or simplified.

Further, terms such as "parallel" or "orthogonal" used herein to show the way in which elements are interrelated, terms such as "rectangle" or "cuboid" used herein to show the shape of an element, and ranges of numerical values as used herein are not expressions that represent only exact meanings but expressions that are meant to also encompass substantially equivalent ranges, e.g. differences of approximately several percent.

Further, in the present specification and drawings, the x axis, the y axis, and the z axis represent the three axes of a three-dimensional orthogonal coordinate system. In a case where the planimetric shape of a power-generating element of a battery is a rectangle, the x axis and the y axis correspond to directions parallel with a first side of the rectangle and a second side orthogonal to the first side, respectively. The z axis corresponds to a direction of laminating of a plurality of battery cells included in the power-generating element.

Further, the term "direction of laminating" as used herein corresponds to a direction normal to principal surfaces of a collector and an active material layer. Further, the term "planar view" as used herein means a case where the battery is viewed from a direction perpendicular to a principal surface of a power-generating element, unless otherwise noted, e.g. in a case where the term is used alone. In the case of a phrase "planar view of a surface" such as "planar view of a first side surface", it means a case where the "surface" is viewed from the front.

Further, the terms "above" and "below" as used herein do not refer to an upward direction (upward in a vertical direction) and a downward direction (downward in a vertical direction) in absolute space recognition, but are used as terms that are defined by a relative positional relationship on the basis of an order of laminating in a laminating configuration. Further, the terms "above" and "below" are applied not only in a case where two constituent elements are placed at a spacing from each other with another constituent element present between the two constituent elements, but also in a case where two constituent elements touch each other by being placed in close contact with each other. In the following description, the negative side of the z axis is referred to as "below" or "lower", and the positive side of the z axis is referred to as "above" or "upper".

Further, the expression "covering A" as used herein means covering at least part of "A". That is, the expression "covering A" encompasses not only a case of "covering the whole of A" but also a case of "covering only part of A". Examples of "A" include side surfaces, principal surfaces, or other surfaces of predetermined members such as layers or terminals.

Further, the ordinal numbers such as "first" and "second" as used herein do not mean the number or order of constituent elements but are used for the purpose of avoiding confusion between constituent elements of the same type and distinguishing between them, unless otherwise noted.

### (Embodiment 1)

In the following, a configuration of a battery according to Embodiment 1 is described.

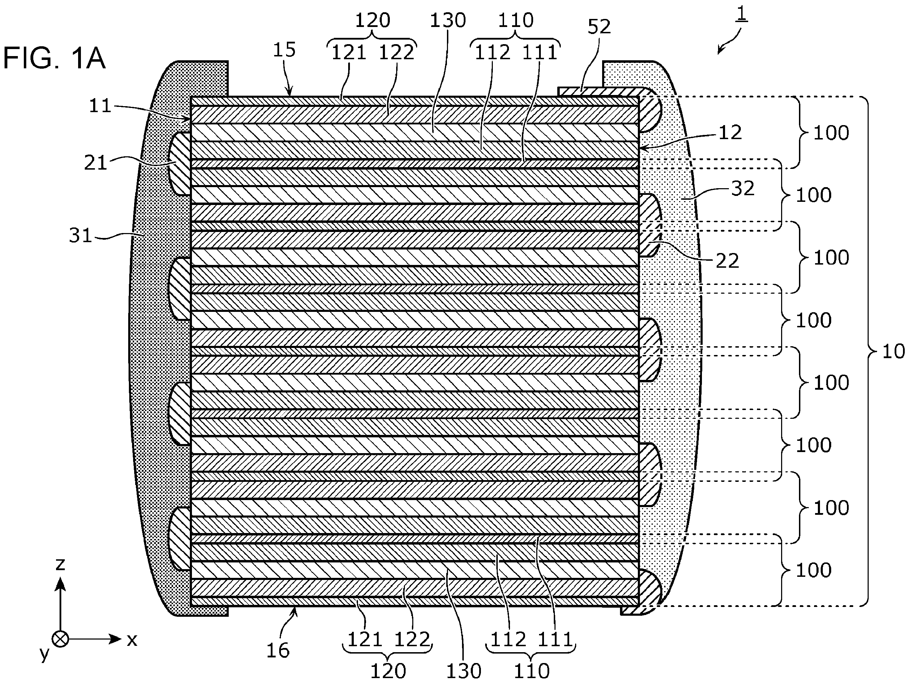

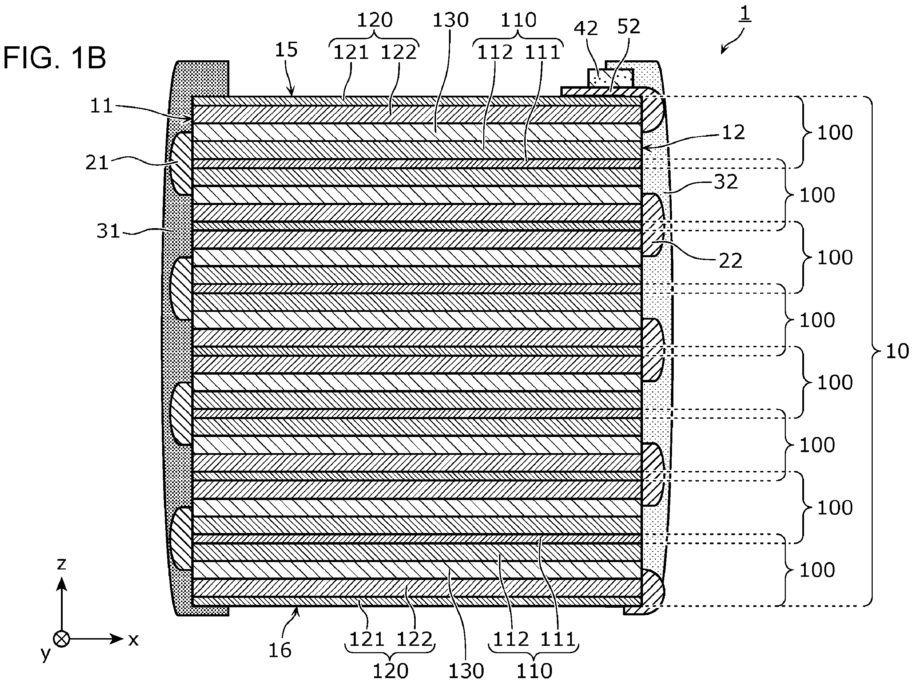

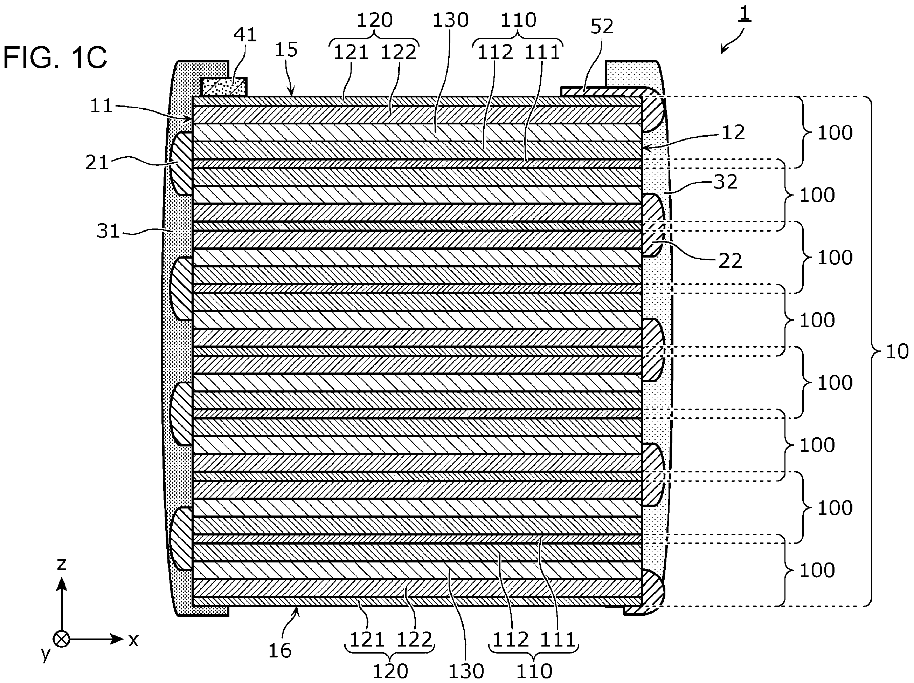

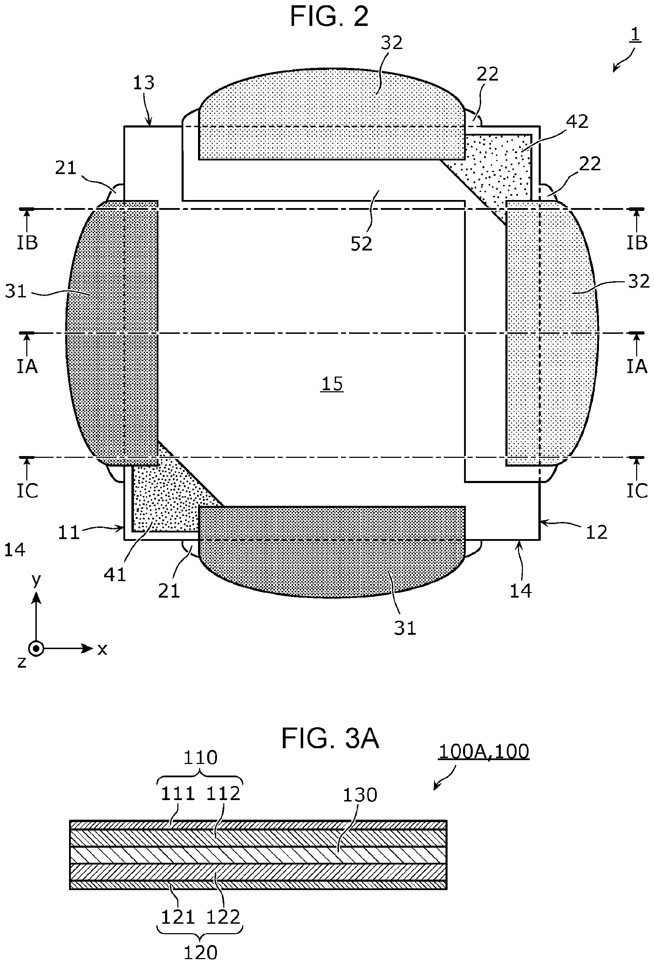

Figs. 1A, 1B, and 1C are cross-sectional views of a battery 1 according to the present embodiment. Fig. 2 is a top view of the battery 1 according to the present embodiment. Fig. 1A represents a cross-section taken along line IA-IA in Fig. 2. Fig. 1B represents a cross-section taken along line IB-IB in Fig. 2. Fig. 1C represents a cross-section taken along line IC-IC in Fig. 2.

As shown in Figs. 1A to 1C and Fig. 2, the battery 1 includes a power-generating element 10, an electrode insulating layer 21, a counter-electrode insulating layer 22, a counter-electrode lead 31, an electrode lead 32, a counter-electrode conductor 41, an electrode conductor 42, and an insulating layer 52. The battery 1 is for example an all-solid-state battery. It should be noted that Fig. 2 applies half-tone dot meshing to the counter-electrode lead 31, the electrode lead 32, the counter-electrode conductor 41, and the electrode conductor 42 to make the shape of each member easier to understand. The same method of illustration applies to other top views, bottom views, or side views.

### [1. Power-generating Element]

First, a configuration of the power-generating element 10 is described in concrete terms with reference to Figs. 1A to 1C and Fig. 2.

The planimetric shape of the power-generating element 10 is for example a rectangle. That is, the shape of the power-generating element 10 is a flat cuboid. The term "flat" here means that a thickness (i.e. a length in a z-axis direction) is shorter than each side (i.e. lengths in x-axis and y-axis directions) or the maximum width of a principal surface. The planimetric shape of the power-generating element 10 may be another polygon such as a regular square, a hexagon, or an octagon. It should be noted that cross-sectional views such as Figs. 1A to 1C illustrate the thickness of each layer with exaggeration to make a layer structure of the power-generating element 10 easier to understand.

As shown in Figs. 1A to 1C and Fig. 2, the power-generating element 10 includes four side surfaces 11, 12, 13, and 14 and two principal surfaces 15 and 16. In the present embodiment, the side surfaces 11, 12, 13, and 14 and the principal surfaces 15 and 16 are each a flat surface.

In the present embodiment, the side surfaces 11 and 13 are examples of the plurality of first side surfaces. The side surfaces 12 and 14 are examples of the plurality of second side surfaces. The side surfaces 11 and 12 face away from each other and are parallel to each other. The side surfaces 13 and 14 face away from each other and are parallel to each other. The side surfaces 11, 12, 13, and 14 are for example cut surfaces formed by en-bloc cutting of a layered product composed of a plurality of battery cells 100.

The principal surface 15 is an example of the first principal surface. The principal surface 16 is an example of the second principal surface. The principal surfaces 15 and 16 face away from each other and are parallel to each other. The principal surface 15 is the uppermost surface of the power-generating element 10. The principal surface 16 is the lowermost surface of the power-generating element 10. The principal surfaces 15 and 16 are larger in area than the side surfaces 11, 12, 13, and 14.

As shown in Figs. 1A to 1C, the power-generating element 10 includes the plurality of battery cells 100. Each of the battery cells 100 is a minimum constituent battery and is also referred to as "unit cell". The plurality of battery cells 100 are electrically connected in parallel and laminated. In the present embodiment, all of the battery cells 100 that the power-generating element 10 includes are electrically connected in parallel. Although, in the example shown in Figs. 1A to 1C, the number of battery cells 100 that the power-generating element 10 includes is 8, this is not intended to impose any limitation. For example, the number of battery cells 100 that the power-generating element 10 includes may be an even number such a 2 or 4 or may be an odd number such as 3 or 5.

Each of the plurality of battery cells 100 includes an electrode layer 110, a counter-electrode layer 120, and a solid electrolyte layer 130. The electrode layer 110 includes an electrode collector 111 and an electrode active material layer 112. The counter-electrode layer 120 includes a counter-electrode collector 121 and a counter-electrode active material layer 122. In each of the plurality of battery cells 100, the electrode collector 111, the electrode active material layer 112, the solid electrolyte layer 130, the counter-electrode active material layer 122, and the counter-electrode collector 121 are laminated in this order along the z axis.

It should be noted that the electrode layer 110 is one of positive-electrode and negative-electrode layers of the battery cell 100. The counter-electrode layer 120 is the other of the positive-electrode and negative-electrode layers of the battery cell 100. The following gives a description by taking as an example a case where the electrode layer 110 is the negative-electrode layer and the counter-electrode layer 120 is the positive-electrode layer.

The plurality of battery cells 100 are substantially identical in configuration to one another. The order of arrangement of the layers of one of two adjacent battery cells 100 is opposite to the order of arrangement of the layers of the other of the two adjacent battery cells 100. That is, the plurality of battery cells 100 are laminated in an arrangement along the z axis so that orders of arrangement of the layers of the battery cells 100 alternate. In the present embodiment, the lowermost and uppermost layers of the power-generating element 10 are collectors of the same polarity, as the number of battery cells 100 is an even number.

In the following, the layers of a battery cell 100 are described with reference to Fig. 3A. Fig. 3A is a cross-sectional view of a battery cell 100 included in the power-generating element 10 according to the present embodiment.

The electrode collector 111 and the counter-electrode collector 121 are each a foil-like, plate-like, or net-like member possessing electrical conductivity. The electrode collector 111 and the counter-electrode collector 121 may each for example be a thin film possessing electrical conductivity. Usable examples of a material of which the electrode collector 111 and the counter-electrode collector 121 are made include metals such as stainless steel (SUS), aluminum (Al), copper (Cu), and nickel (Ni). The electrode collector 111 and the counter-electrode collector 121 may be made of different materials.

Examples of the thicknesses of the electrode collector 111 and the counter-electrode collector 121 include, but are not limited to, thicknesses greater than or equal to 5 µm and less than or equal to 100 µm. The electrode active material layer 112 is in contact with a principal surface of the electrode collector 111. It should be noted that the electrode collector 111 may include a collector layer, provided in a portion that is in contact with the electrode active material layer 112, that is a layer containing an electrically conductive material. The counter-electrode active material layer 122 is in contact with a principal surface of the counter-electrode collector 121. It should be noted that the counter-electrode collector 121 may include a collector layer, provided in a portion that is in contact with the counter-electrode active material layer 122, that is a layer containing an electrically conductive material.

The electrode active material layer 112 is disposed on a principal surface of the electrode collector 111 that faces toward the counter-electrode layer 120. The electrode active material layer 112 contains, for example, a negative-electrode active material as an electrode material. The electrode active material layer 112 is placed opposite the counter-electrode active material layer 122.

Usable examples of the negative-electrode active material contained in the electrode active material layer 112 include negative-electrode active materials such as graphite and metallic lithium. Usable examples of materials for the negative-electrode active material include various types of material from and into which ions of lithium (Li), magnesium (Mg), or other substances can be desorbed and inserted.

Further, a possible example of a material contained in the electrode active material layer 112 may be a solid electrolyte such as an inorganic solid electrolyte. A usable example of the inorganic solid electrolyte is a sulfide solid electrolyte or an oxide solid electrolyte. A usable example of the sulfide solid electrolyte is a mixture of lithium sulfide (Li₂S) and diphosphorous pentasulfide (P₂S₅). Further, a possible example of a material contained in the electrode active material layer 112 may be an electrical conducting material such as acetylene black or a binder such as polyvinylidene fluoride.

The electrode active material layer 112 is fabricated by preparing a paste of paint into which the materials to be contained in the electrode active material layer 112 were kneaded together with a solvent, spreading the paste of paint over the principal surface of the electrode collector 111, and drying the paste of paint. For increased density of the electrode active material layer 112, an electrode layer 110 (also referred to as "electrode plate") including the electrode active material layer 112 and the electrode collector 111 may be pressed after the drying. Examples of the thickness of the electrode active material layer 112 include, but are not limited to, thicknesses greater than or equal to 5 µm and less than or equal to 300 µm.

The counter-electrode active material layer 122 is disposed on a principal surface of the counter-electrode collector 121 that faces toward the electrode layer 110. The counter-electrode active material layer 122 is a layer containing a positive-electrode material such as an active material. The positive-electrode material is a material that is opposite in polarity to a negative-electrode material. The counter-electrode active material layer 122 contains, for example, a positive-electrode active material.

Usable examples of the positive-electrode active material contained in the counter-electrode active material layer 122 include positive-electrode active materials such as a lithium cobalt oxide complex oxide (LCO), a lithium nickel oxide complex oxide (LNO), a lithium manganese oxide complex oxide (LMO), a lithium-manganese-nickel complex oxide (LMNO), a lithium-manganese-cobalt complex oxide (LMCO), a lithium-nickel-cobalt complex oxide (LNCO), a lithium-nickel-manganese-cobalt complex oxide (LNMCO). Usable examples of materials for the positive-electrode active material include various types of material from and into which ions of Li, Mg, or other substances can be desorbed and inserted.

Further, a possible example of a material contained in the counter-electrode active material layer 122 may be a solid electrolyte such as an inorganic solid electrolyte. A usable example of the inorganic solid electrolyte is a sulfide solid electrolyte or an oxide solid electrolyte. A usable example of the sulfide solid electrolyte is a mixture of Li₂S and P₂S₅. The positive-electrode active material may have a surface coated with the solid electrolyte. Further, a possible example of a material contained in the counter-electrode active material layer 122 may be an electrical conducting material such as acetylene black or a binder such as polyvinylidene fluoride.

The counter-electrode active material layer 122 is fabricated by preparing a paste of paint into which the materials to be contained in the counter-electrode active material layer 122 were kneaded together with a solvent, spreading the paste of paint over the principal surface of the counter-electrode collector 121, and drying the paste of paint. For increased density of the counter-electrode active material layer 122, a counter-electrode layer 120 (also referred to as "counter-electrode plate") including the counter-electrode active material layer 122 and the counter-electrode collector 121 may be pressed after the drying. Examples of the thickness of the counter-electrode active material layer 122 include, but are not limited to, thicknesses greater than or equal to 5 µm and less than or equal to 300 µm.

The solid electrolyte layer 130 is disposed between the electrode active material layer 112 and the counter-electrode active material layer 122. The solid electrolyte layer 130 is in contact with both the electrode active material layer 112 and the counter-electrode active material layer 122. The solid electrolyte layer 130 is a layer containing an electrolyte material. A usable example of the electrolyte material is a common publicly-known electrolyte for use in a battery. The solid electrolyte layer 130 may have a thickness greater than or equal to 5 µm and less than or equal to 300 µm or greater than or equal to 5 µm and less than or equal to 100 µm.

The solid electrolyte layer 130 contains a solid electrolyte. A usable example of the solid electrolyte is a solid electrolyte such as an inorganic solid electrolyte. A usable example of the inorganic solid electrolyte is a sulfide solid electrolyte or an oxide solid electrolyte. A usable example of the sulfide solid electrolyte is a mixture of Li₂S and P₂S₅. It should be noted that the solid electrolyte layer 130 may contain a binder such as polyvinylidene fluoride in addition to the electrolyte material.

In the present embodiment, the electrode active material layer 112, the counter-electrode active material layer 122, and the solid electrolyte layer 130 are maintained in a parallel plate state. This makes it possible to reduce the occurrence of a crack or a collapse due to bending. It should be noted that the electrode active material layer 112, the counter-electrode active material layer 122, and the solid electrolyte layer 130 may be smoothly bent together.

Further, in the present embodiment, an end face of the counter-electrode layer 120 located at the side surface 11 and an end face of the electrode layer 110 located at the side surface 11 are even with each other when viewed from the z-axis direction. Specifically, an end face of the counter-electrode collector 121 located at the side surface 11 and an end face of the electrode collector 111 located at the side surface 11 are even with each other when viewed from the z-axis direction. The same applies to end faces of the counter-electrode collector 121 and the electrode collector 111 located at the side surfaces 12, 13, and 14.

More specifically, in the battery cell 100, the electrode collector 111, the electrode active material layer 112, the solid electrolyte layer 130, the counter-electrode active material layer 122, and the counter-electrode collector 121 are the same in shape and size as one another and have their contours in conformance with one another. That is, the battery cell 100 has the shape of a flat cuboidal plate.

As shown in Figs. 1A to 1C, in the present embodiment, two adjacent battery cells 100 share a collector with each other. For example, the lowermost battery cell 100 and a battery cell 100 a layer higher than the lowermost battery cell 100 share one electrode collector 111 with each other.

Specifically, as shown in Figs. 1A to 1C, in the plurality of battery cells 100, two electrode layers 110 adjacent to each other share each other's electrode collector 111. Electrode active material layers 112 are provided on both principal surfaces of the electrode collector 111 thus shared. Further, two counter-electrode layers 120 adjacent to each other share each other's counter-electrode collector 121. Counter-electrode active material layers 122 are provided on both principal surfaces of the counter-electrode collector 121 thus shared.

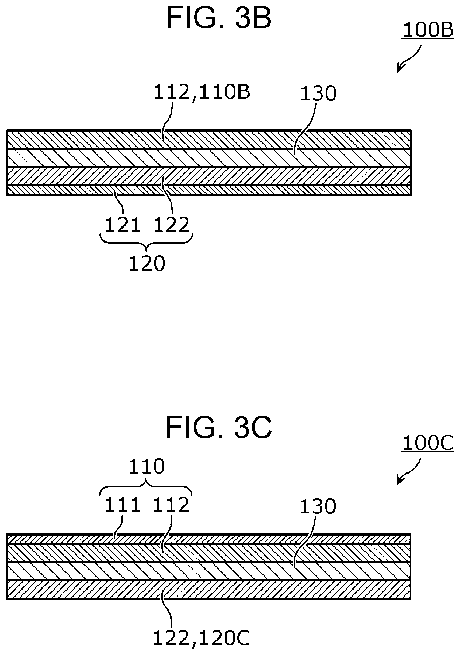

Such a battery 1 is formed by laminating not only the battery cell 100 shown in Fig. 3A but also a combination of battery cells 100B and 100C shown in Figs. 3B and 3C. It should be noted that the battery cell 100 shown in Fig. 3A is described as a battery cell 100A here.

The battery cell 100B shown in Fig. 3B has a configuration in which the electrode collector 111 is excluded from the battery cell 100A shown in Fig. 3A. That is, the battery cell 100B includes an electrode layer 110B composed solely of an electrode active material layer 112.

The battery cell 100C shown in Fig. 3C has a configuration in which the counter-electrode collector 121 is excluded from the battery cell 100A shown in Fig. 3A. That is, the battery cell 100C includes a counter-electrode layer 120C composed solely of a counter-electrode active material layer 122.

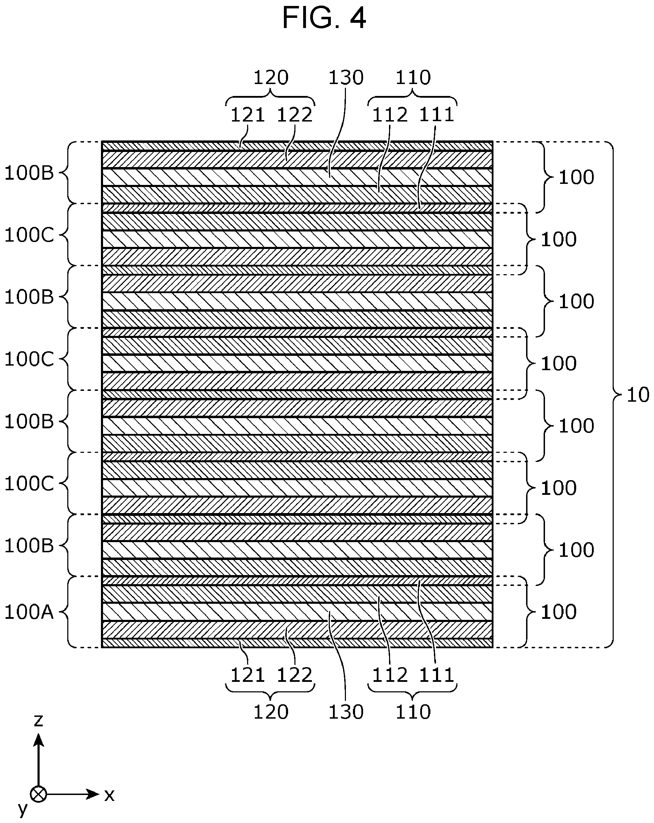

Fig. 4 is a cross-sectional view showing the power-generating element 10 according to the present embodiment. Fig. 4 is a diagram showing only the power-generating element 10 of Figs. 1A to 1C. As shown in Fig. 4, the battery cell 100A is placed at the lowermost layer, and the battery cells 100B and 100C are alternately laminated upward. In this case, the battery cell 100B is laminated with the orientation illustrated in Fig. 3B turned upside down. In this way, the power-generating element 10 is formed.

It should be noted that this is not the only method for forming a power-generating element 10. For example, the battery cell 100A may be placed at the uppermost layer. Alternatively, the battery cell 100A may be placed in a position different from both the uppermost layer and the lowermost layer. Further, a plurality of the battery cells 100A may be used. Further, a unit of two battery cells 100 sharing a collector with each other may be formed by coating both sides of one collector, and the unit thus formed may be laminated.

As noted above, in the power-generating element 10 according to the present embodiment, all of the battery cells 100 are connected in parallel, and there are no battery cells connected in series. For this reason, during charging and discharging of the battery 1, there hardly occurs nonuniformity in charging and discharging states due to variations in the capacity of the battery cells 100 or other reasons. This makes it possible to drastically reduce the risk of one or some of the plurality of battery cells 100 becoming overcharged or overdischarged, making it possible to enhance the reliability of the battery 1.

### [2. Electrode Insulating Layer and Counter-electrode Insulating Layer]

Next, the electrode insulating layer 21 and the counter-electrode insulating layer 22 are described.

The electrode insulating layer 21 is an example of the electrode insulating member and, as shown in Figs. 1A to 1C, covers the electrode layer 110 on the side surface 11. Specifically, the electrode insulating layer 21 covers the electrode collector 111 and the electrode active material layer 112 on the side surface 11.

In the present embodiment, although not illustrated, a configuration of the electrode insulating layer 21 on the side surface 14 is similar to that of the electrode insulating layer 21 on the side surface 11. That is, the electrode insulating layer 21 covers the electrode layer 110 of each of the plurality of battery cells 100 on the side surface 14.

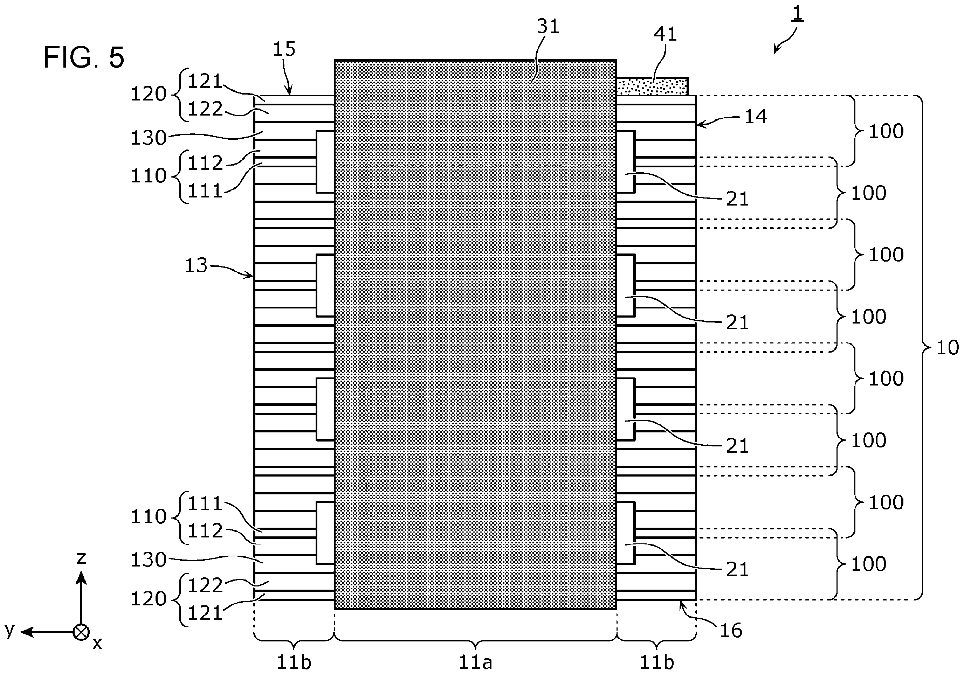

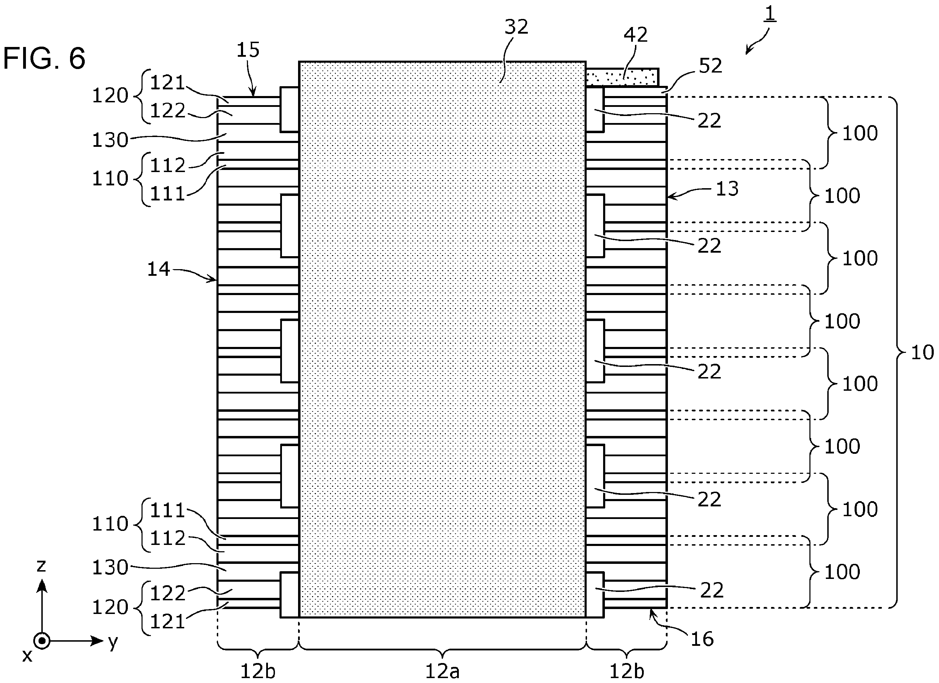

Fig. 5 is a side view of the battery 1 according to the present embodiment. Specifically, Fig. 5 represents the battery 1 as viewed from the front of the side surface 11. In this case, Fig. 5 omits to illustrate the counter-electrode insulating layer 22 and an electrode lead 32 that are provided on the side surface 13 and the electrode insulating layer 21 and a counter-electrode lead 31 that are provided on the side surface 14. The same applies to Fig. 6, which will be described later.

As shown in Fig. 5, the side surface 11 includes a central region 11a in which the counter-electrode lead 31 is provided and corner regions 11b between which the central region 11a is interposed. The electrode insulating layer 21 covers the electrode layer 110 of each of the plurality of battery cells 100 in the central region 1 1a of the side surface 11. The electrode insulating layer 21 does not cover at least part of the counter-electrode layer 120 of each of the plurality of battery cells 100 in the central region 11a of the side surface 11. For example, the electrode insulating layer 21 does not cover the counter-electrode collector 121. For this reason, the electrode insulating layer 21 has a striped shape in a planar view of the side surface 11.

In this case, the electrode insulating layer 21 continuously covers the electrode layers 110 of two adjacent battery cells 100. Specifically, the electrode insulating layer 21 continuously covers an area from at least part of the solid electrolyte layer 130 of one of the two adjacent battery cells 100 to at least part of the solid electrolyte layer 130 of the other of the two adjacent battery cells 100.

In this way, the electrode insulating layer 21 covers at least part of the solid electrolyte layer 130 in the central region 11a of the side surface 11. Specifically, the contours of the electrode insulating layer 21 overlap the solid electrolyte layer 130 in a planar view of the side surface 11. This reduces the risk of exposing the electrode layer 110 even if there are fluctuations in width (length in the z-axis direction) due to variations in the manufacture of the electrode insulating layer 21. This makes it possible to reduce the risk of a short circuit between the electrode layer 110 and the counter-electrode layer 120 via the counter-electrode lead 31 formed to cover the electrode insulating layer 21. Further, there are very fine asperities on an end face of the solid electrolyte layer 130, which is made of a powdered material. For this reason, the electrode insulating layer 21 becomes embedded in the asperities, bringing about improvement in adhesion strength of the electrode insulating layer 21 and improvement in insulation reliability.

In the present embodiment, the electrode insulating layer 21 may cover the whole of the solid electrolyte layer 130 in the central region 11a of the side surface 11. Specifically, the contours of the electrode insulating layer 21 may overlap a boundary between the solid electrolyte layer 130 and the counter-electrode active material layer 122. It is not essential, however, that the electrode insulating layer 21 cover part of the solid electrolyte layer 130. For example, the contours of the electrode insulating layer 21 may overlap a boundary between the solid electrolyte layer 130 and the electrode active material layer 112.

It should be noted that the electrode insulating layer 21 may cover the electrode layer 110 in the corner regions 11b too. Similarly, the electrode insulating layer 21 may cover the solid electrolyte layer 130 and the counter-electrode layer 120 in the corner regions 11b. For example, the electrode insulating layer 21 may cover an area from one end of the side surface 11 to the other along the y-axis direction.

The counter-electrode insulating layer 22 is an example of the counter-electrode insulating member and, as shown in Figs. 1A to 1C, covers the counter-electrode layer 120 on the side surface 12. Specifically, the counter-electrode insulating layer 22 covers the counter-electrode collector 121 and the counter-electrode active material layer 122 on the side surface 12.

In the present embodiment, although not illustrated, a configuration of the counter-electrode insulating layer 22 on the side surface 13 is similar to that of the counter-electrode insulating layer 22 on the side surface 12. That is, the counter-electrode insulating layer 22 covers the counter-electrode layer 120 of each of the plurality of battery cells 100 on the side surface 13.

Fig. 6 is a side view of the battery 1 according to the present embodiment. Specifically, Fig. 6 represents the battery 1 as viewed from the front of the side surface 12.

As shown in Fig. 6, the side surface 12 includes a central region 12a in which the electrode lead 32 is provided and corner regions 12b between which the central region 12a is interposed. The counter-electrode insulating layer 22 covers the counter-electrode layer 120 of each of the plurality of battery cells 100 in the central region 12a of the side surface 12. The counter-electrode insulating layer 22 does not cover at least part of the electrode layer 110 of each of the plurality of battery cells 100 in the central region 12a of the side surface 12. For example, the counter-electrode insulating layer 22 does not cover the electrode collector 111. For this reason, the counter-electrode insulating layer 22 has a striped shape in a planar view of the side surface 12.

In this case, the counter-electrode insulating layer 22 continuously covers the counter-electrode layers 120 of two adjacent battery cells 100. Specifically, the counter-electrode insulating layer 22 continuously covers an area from at least part of the solid electrolyte layer 130 of one of the two adjacent battery cells 100 to at least part of the solid electrolyte layer 130 of the other of the two adjacent battery cells 100.

In this way, the counter-electrode insulating layer 22 covers at least part of the solid electrolyte layer 130 in the central region 12a of the side surface 12. Specifically, the contours of the counter-electrode insulating layer 22 overlap the solid electrolyte layer 130 in a planar view of the side surface 12. This reduces the risk of exposing the counter-electrode layer 120 even if there are fluctuations in width (length in the z-axis direction) due to variations in the manufacture of the counter-electrode insulating layer 22. This makes it possible to reduce the risk of a short circuit between the counter-electrode layer 120 and the electrode layer 110 via the electrode lead 32 formed to cover the counter-electrode insulating layer 22. Further, the counter-electrode insulating layer 22 becomes embedded in asperities on an end face of the solid electrolyte layer 130, bringing about improvement in adhesion strength of the counter-electrode insulating layer 22 and improvement in insulation reliability.

In the present embodiment, the counter-electrode insulating layer 22 may cover the whole of the solid electrolyte layer 130 in the central region 12a of the side surface 12. Specifically, the contours of the counter-electrode insulating layer 22 may overlap a boundary between the solid electrolyte layer 130 and the electrode active material layer 112. It is not essential, however, that the counter-electrode insulating layer 22 cover part of the solid electrolyte layer 130. For example, the contours of the counter-electrode insulating layer 22 may overlap a boundary between the solid electrolyte layer 130 and the counter-electrode active material layer 122.

It should be noted that the counter-electrode insulating layer 22 may cover the counter-electrode layer 120 in the corner regions 12b too. Similarly, the counter-electrode insulating layer 22 may cover the solid electrolyte layer 130 and the electrode layer 110 in the corner regions 12b. For example, the counter-electrode insulating layer 22 may cover an area from one end of the side surface 12 to the other along the y-axis direction.

Further, the power-generating element 10 according to the present embodiment has counter-electrode collectors 121 at both the uppermost layer and the lowermost layer. As shown in Figs. 1A to 1C and Fig. 6, in the vicinities of the upper and lower ends of the side surface 12, the counter-electrode insulating layer 22 covers part of a principal surface of the counter-electrode collector 121 located at the uppermost layer and part of a principal surface of the counter-electrode collector 121 located at the lowermost layer. This causes the counter-electrode insulating layer 22 to have resistance to an external force or other forces from the z-axis direction and inhibits the counter-electrode insulating layer 22 from being detached. This also makes it possible to, even in a case where the electrode lead 32 wraps around the principal surface 15 or 16 of the power-generating element 10, prevent the electrode lead 32 from making a short circuit by making contact with the counter-electrode collector 121. In this way, the reliability of the battery 1 can be enhanced.

The electrode insulating layer 21 and the counter-electrode insulating layer 22 are each made of an insulating material possessing electrical insulating properties. For example, the electrode insulating layer 21 and the counter-electrode insulating layer 22 each contain resin. Examples of the resin include, but are not limited to, epoxy resin. As the insulating material, an inorganic material may be used. A usable insulating material is selected on the basis of various properties such as flexibility, gas barrier properties, impact resistance, and thermal resistance. The electrode insulating layer 21 and the counter-electrode insulating layer 22 are made of the same material as each other. Alternatively, they may be made of different materials from each other.

### [3. Counter-electrode Lead and Electrode Lead]

Next, the counter-electrode lead 31 and the electrode lead 32 are described.

As shown in Figs. 1A to 1C and Fig. 5, the counter-electrode lead 31 is an electric conductor, electrically connected to the counter-electrode layer 120, that covers the central region 11a of the side surface 11 and the electrode insulating layer 21. The counter-electrode lead 31 is not provided in the corner regions 11b. That is, the counter-electrode lead 31 is provided in a region of the side surface 11 excluding the corner regions 11b, i.e. in the central region 11a. It should be noted that the central region 11a is an example of the first region. Specifically, the counter-electrode lead 31 covers the electrode insulating layer 21 and a portion of the central region 11a of the side surface 11 not covered with the electrode insulating layer 21.

In the portion of the central region 11a not covered with the electrode insulating layer 21, end faces of the counter-electrode collector 121 and the counter-electrode active material layer 122 are exposed. For this reason, the counter-electrode lead 31 makes contact with the end faces of the counter-electrode collector 121 and the counter-electrode active material layer 122 to be electrically connected to the counter-electrode layer 120. Further, since the counter-electrode active material layer 122 is made of a powdered material, there are very fine asperities as in the case of the solid electrolyte layer 130. The counter-electrode lead 31 becomes embedded in the asperities on the end face of the counter-electrode active material layer 122, bringing about improvement in adhesion strength of the counter-electrode lead 31 and improvement in electrical connection reliability.

The counter-electrode lead 31 is electrically connected to the counter-electrode layer 120 of each of the plurality of battery cells 100. That is, the counter-electrode lead 31 functions to make each battery cell 100 to be electrically connected in parallel to the other battery cell 100. As shown in Figs. 1A to 1C and Fig. 5, the counter-electrode lead 31 covers substantially the whole area from the lower end of the central region 11a of the side surface 11 to the upper end en bloc.

The power-generating element 10 according to the present embodiment has counter-electrode collectors 121 at both the uppermost layer and the lowermost layer. As shown in Figs. 1A to 1C, in the vicinities of the upper and lower ends of the side surface 11, the counter-electrode lead 31 covers part of a principal surface of the counter-electrode collector 121 located at the uppermost layer and part of a principal surface of the counter-electrode collector 121 located at the lowermost layer. This causes the counter-electrode lead 31 to have resistance to an external force or other forces from the z-axis direction and inhibits the counter-electrode lead 31 from being detached. This causes an increase in area of contact between the counter-electrode lead 31 and the counter-electrode collectors 121, thus causing a decrease in resistance of connection between the counter-electrode lead 31 and the counter-electrode collectors 121 and bringing about improvement in large-current characteristic. For example, this makes fast charging of the battery 1 possible.

In the present embodiment, a counter-electrode lead 31 that is similar in configuration to that provided on the side surface 11 is provided on the side surface 14 too. That is, the counter-electrode lead 31 covers a central region of the side surface 14 excluding corner regions and the electrode insulating layer 21 and is connected to the counter-electrode layer 120 of each of the plurality of battery cells 100.

As shown in Figs. 1A to 1C and Fig. 6, the electrode lead 32 is an electric conductor, electrically connected to the electrode layer 110, that covers the central region 12a of the side surface 12 and the counter-electrode insulating layer 22. The electrode lead 32 is not provided in the corner regions 12b. That is, the electrode lead 32 is provided in a region of the side surface 12 excluding the corner regions 12b, i.e. in the central region 12a. It should be noted that the central region 12a is an example of the second region. Specifically, the electrode lead 32 covers the counter-electrode insulating layer 22 and a portion of the central region 12a of the side surface 12 not covered with the counter-electrode insulating layer 22.

In the portion of the central region 12a not covered with the counter-electrode insulating layer 22, end faces of the electrode collector 111 and the electrode active material layer 112 are exposed. For this reason, the electrode lead 32 makes contact with the end faces of the electrode collector 111 and the electrode active material layer 112 to be electrically connected to the electrode layer 110. Further, since the electrode active material layer 112 is made of a powdered material, there are very fine asperities as in the case of the solid electrolyte layer 130. The electrode lead 32 becomes embedded in the asperities on the end face of the electrode active material layer 112, bringing about improvement in adhesion strength of the electrode lead 32 and improvement in electrical connection reliability.

The electrode lead 32 is electrically connected to the electrode layer 110 of each of the plurality of battery cells 100. That is, the electrode lead 32 functions to make each battery cell 100 to be electrically connected in parallel to the other battery cell 100. As shown in Figs. 1A to 1C and Fig. 6, the electrode lead 32 covers substantially the whole area from the lower end of the central region 12a of the side surface 12 to the upper end en bloc.

In the present embodiment, the electrode lead 32 covers, via the insulating layer 52, part of the principal surface of the counter-electrode collector 121 located at the uppermost layer. This causes the electrode lead 32 to have resistance to an external force or other forces from the z-axis direction and inhibits the electrode lead 32 from being detached.

The counter-electrode lead 31 and the electrode lead 32 are made, for example, of a resin material possessing electrical conductivity. Alternatively, the counter-electrode lead 31 and the electrode lead 32 may be made of a metallic material such as solder. A usable electrically conductive material is selected on the basis of various properties such as flexibility, gas barrier properties, impact resistance, thermal resistance, and solder wettability. The counter-electrode lead 31 and the electrode lead 32 are made of the same material as each other. Alternatively, they may be made of different materials from each other.

### [4. Counter-electrode Conductor and Electrode Conductor]

Next, the counter-electrode conductor 41 and the electrode conductor 42 are described.

The counter-electrode conductor 41 is an electric conductor that connects a plurality of the counter-electrode leads 31. In the present embodiment, the counter-electrode conductor 41 is provided at the principal surface 15 of the power-generating element 10. As shown in Fig. 1C and Fig. 2, the counter-electrode conductor 41 is connected to an upper end of each of the plurality of counter-electrode leads 31, i.e. a portion of each counter-electrode lead 31 covering the principal surface 15.

In the present embodiment, since the counter-electrode leads 31 are provided on the two adjacent side surfaces 11 and 14, the counter-electrode conductor 41 is provided in a corner portion of the principal surface 15 that is near connected portions of the side surface 11 and the side surface 14. The shape of the counter-electrode conductor 41 is, but is not limited to, a triangle in planar view. The planimetric shape of the counter-electrode conductor 41 may be a rectangle, a circle, or other shapes.

The electrode conductor 42 is an electric conductor that connects a plurality of the electrode leads 32. In the present embodiment, the electrode conductor 42 is provided at the principal surface 15 of the power-generating element 10. As shown in Fig. 1B and Fig. 2, the electrode conductor 42 is connected to an upper end of each of the plurality of electrode leads 32, i.e. a portion of each electrode lead 32 covering the principal surface 15.

In the present embodiment, since the counter-electrode leads 32 are provided on the two adjacent side surfaces 12 and 13, the electrode conductor 42 is provided in a corner portion of the principal surface 15 that is near connected portion of the side surface 12 and the side surface 13. The shape of the electrode conductor 42 is, but is not limited to, a triangle in planar view. The planimetric shape of the electrode conductor 42 may be a rectangle, a circle, or other shapes.

The counter-electrode conductor 41 and the electrode conductor 42 are made, for example, of a resin material possessing electrical conductivity. Alternatively, the counter-electrode conductor 41 and the electrode conductor 42 may be made of a metallic material such as solder. The counter-electrode conductor 41 and the electrode conductor 42 may be metal plates or metal foil. A usable electrically conductive material is selected on the basis of various properties such as flexibility, gas barrier properties, impact resistance, thermal resistance, and solder wettability. The counter-electrode conductor 41 and the electrode conductor 42 are made of the same material as each other. Alternatively, they may be made of different materials from each other.

Although the counter-electrode conductor 41 is provided as a member different from the counter-electrode collector 121 located at the uppermost layer, this is not intended to impose any limitation. That is, the counter-electrode collector 121 located at the uppermost layer may function as the counter-electrode conductor 41.

### [5. Insulating Layer]

Next, the insulating layer 52 is described.

The insulating layer 52 is an example of the second insulating layer and, as shown in Fig. 1B and Fig. 2, is disposed between the electrode conductor 42 and the principal surface 15. Further, the insulating layer 52 is disposed between the upper end of the electrode lead 32 and the principal surface 15. In the present embodiment, since the power-generating element 10 has a counter-electrode collector 121 at the uppermost layer, the insulating layer 52 is provided so that the electrode lead 32 and the electrode conductor 42 do not make contact with the counter-electrode collector 121. The insulating layer 52 is for example formed integrally with the uppermost part of the counter-electrode insulating layer 22 provided on each of the side surfaces 12 and 13.

Although the insulating layer 52 is provided on top of the principal surface 15 and in the shape of letter L along the side surfaces 12 and 13, this is not intended to impose any limitation. For example, the insulating layer 52 may be provided to cover the entirety of the principal surface 15. That is, the insulating layer 52 may be provided between the upper end of the counter-electrode lead 31 and the counter-electrode collector 121 located at the uppermost layer and between the counter-electrode conductor 41 and the counter-electrode collector 121 located at the uppermost layer.

The insulating layer 52 is made of an insulating material possessing electrical insulating properties. For example, the insulating layer 52 contains resin. Examples of the resin include, but are not limited to, epoxy resin. As the insulating material, an inorganic material may be used. A usable insulating material is selected on the basis of various properties such as flexibility, gas barrier properties, impact resistance, and thermal resistance. The insulating layer 52 is made of the same material as the electrode insulating layer 21 and the counter-electrode insulating layer 22. Alternatively, it may be made of a different material.

### [6. Conclusion]

As noted above, in the battery 1 according to the present embodiment, the counter-electrode leads 31 are provided on the plurality of side surfaces 11 and 14 and connected by the counter-electrode conductor 41. Similarly, the electrode leads 32 are provided on the plurality of side surfaces 12 and 13 and connected by the electrode conductor 42. This makes it possible to increase current flow pathways at each of the positive and negative electrodes of the battery 1. That is, this makes it possible to increase the cross-sectional area of each of the counter-electrode and electrode leads 31 and 32 orthogonal to the direction of flow of an electric current, thus making it possible to decrease the resistance of the counter-electrode leads 31 and the electrode leads 32 and enhance large-current characteristics.

Further, since the counter-electrode leads 31 and the electrode leads 32 are provided except for the corner regions 11b and 12b, where the risk of a short circuit and a collapse is high, of the power-generating element 10, the reliability of the battery 1 can be enhanced.

Further, the provision of the electrode insulating layer 21 and the counter-electrode layer 22 on the side surfaces of the power-generating element 10 makes it possible to reduce the occurrence of a short circuit between the electrode layer 110 and the counter-electrode layer 120. Further, for example, electrically connecting all of the battery cells 100 in parallel makes it possible to inhibit a particular battery cell 100 from becoming overcharged or overdischarged due to variations in the capacity of the battery cells. In this way, the reliability of the battery 1 can be enhanced.

Further, the counter-electrode leads 31 and the electrode leads 32 each function to make a parallel connection of the plurality of battery cells 100. As shown in Figs. 1A to 1C, the counter-electrode leads 31 and the electrode leads 32 are formed to be in close contact with and cover the side surfaces of the power-generating element 10. This makes it possible to reduce the volumes of these leads. That is, this makes it possible to make terminal electrodes smaller in volume than collecting tab electrodes that have conventionally been used, thus bringing about improvement in energy density of the battery 1 per volume.

Although the present embodiment has illustrated an example in which the counter-electrode conductor 41 and the electrode conductor 42 are provided at the same principal surface 15, the counter-electrode conductor 41 and the electrode conductor 42 may be provided at different principal surfaces. For example, the counter-electrode conductor 41 may be provided at the principal surface 15, and the electrode conductor 42 may be provided at the principal surface 16.

Further, a counter-electrode conductor 41 and a electrode conductor 42 may be provided at the principal surface 16 in addition to those provided at the principal surface 15. In this case, an insulating layer 52 is provided on the principal surface 16 to inhibit the electrode conductor 42 from making contact with the counter-electrode collector 121 located at the lowermost layer.

### (Embodiment 2)

The following describes Embodiment 2.

A battery according to Embodiment 2 differs from the battery according to Embodiment 1 in that an insulating layer is provided in the corner regions of the power-generating element. The following gives a description with a focus on differences from Embodiment 1, and omits or simplifies a description of common features.

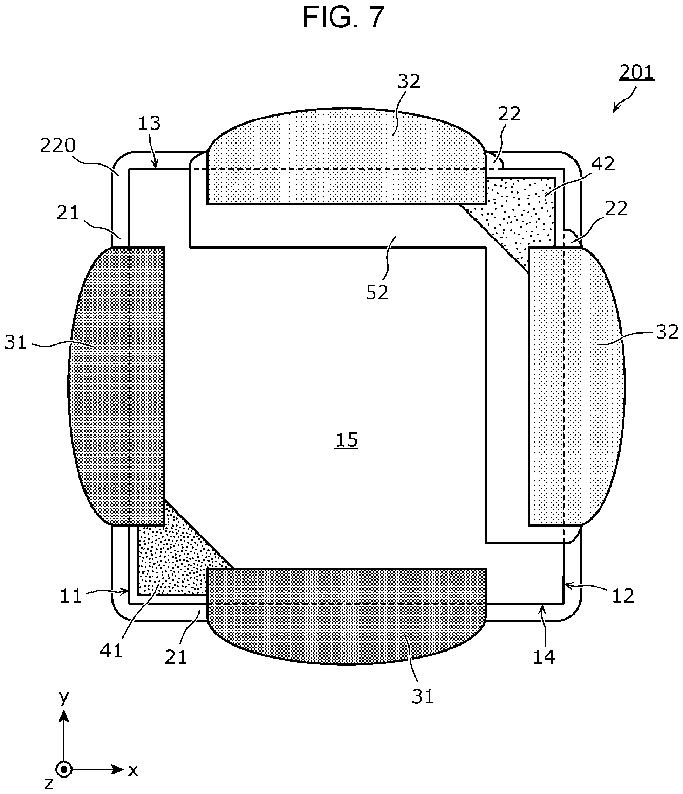

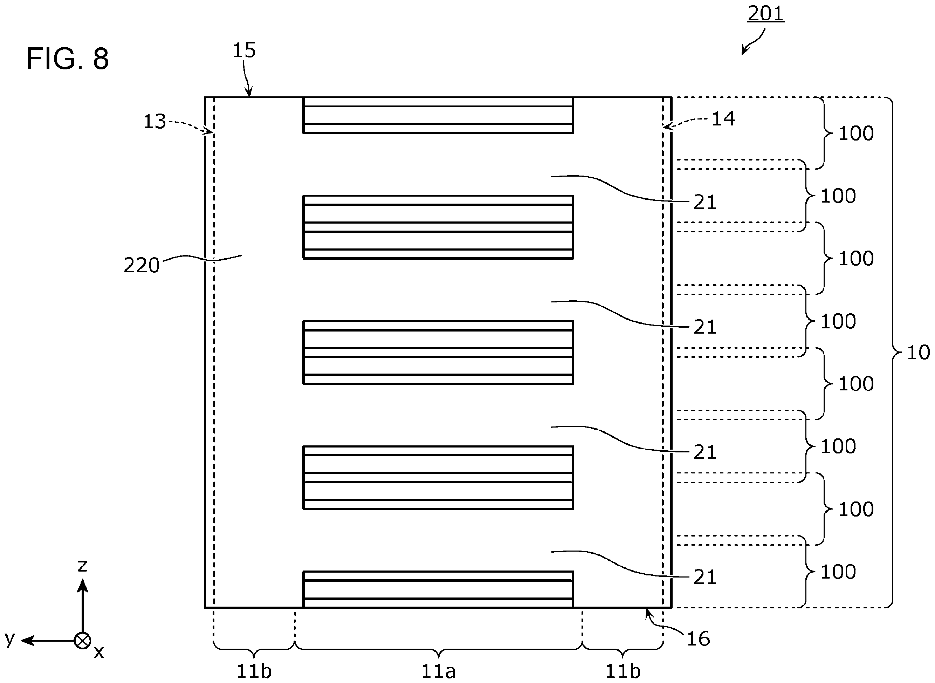

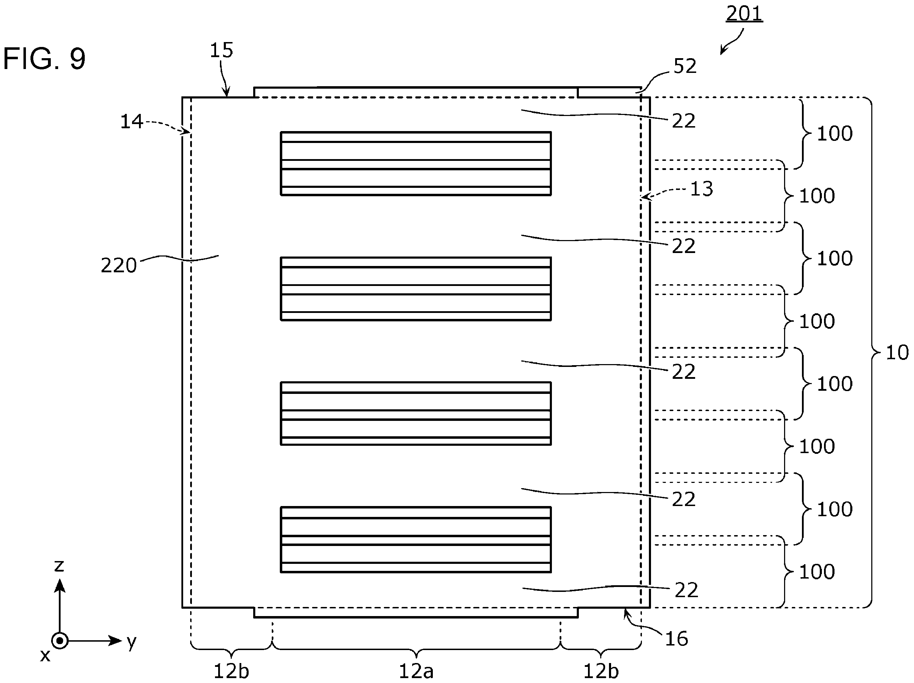

Fig. 7 is a top view of a battery 201 according to the present embodiment. Figs. 8 and 9 are side views of the battery 201 according to the present embodiment. Specifically, Fig. 8 represents the battery 201 as viewed from the front of the side surface 11 with the counter-electrode lead 31 seen through. Fig. 9 represents the battery 201 as viewed from the front of the side surface 12 with the electrode lead 32 seen through. Figs. 8 and 9 omit to illustrate the counter-electrode insulating layer 22 and the electrode lead 32 that are provided on the side surface 13 and the electrode insulating layer 21 and the counter-electrode lead 31 that are provided on the side surface 14.

As shown in Figs. 7 to 9, the battery 201 includes an end insulating layer 220. The end insulating layer 220 is an example of the end insulating member and covers the corner regions of each of the side surfaces 11, 12, 13, and 14 of the power-generating element 10. For example, as shown in Fig. 8, the end insulating layer 220 covers the entirety of the corner regions 11b of the side surface 11. Further, as shown in Fig. 9, the end insulating layer 220 covers the entirety of the corner regions 12b of the side surface 12. The same applies to the side surfaces 13 and 14.

The end insulating layer 220 is made of an insulating material possessing electrical insulating properties. For example, the end insulating layer 220 contains resin. Examples of the resin include, but are not limited to, epoxy resin. As the insulating material, an inorganic material may be used. A usable insulating material is selected on the basis of various properties such as flexibility, gas barrier properties, impact resistance, and thermal resistance.

In the present embodiment, the end insulating layer 220 is formed integrally with the electrode insulating layer 21 and the counter-electrode insulating layer 22. That is, the end insulating layer 220 is made of the same material as the electrode insulating layer 21 and the counter-electrode insulating layer 22. Alternatively, the end insulating layer 220 may be made of a different material from the electrode insulating layer 21 and the counter-electrode insulating layer 22.

Covering the corner regions of each side surface of the power-generating element 10 with an insulating member in this way makes it possible to reduce the occurrence of a short circuit and a collapse. This makes it possible to enhance the reliability of the battery 201.

It should be noted that the end insulating layer 220 does not need to cover part of each corner region. For example, the end insulating layer 220 may intensively cover only a portion of each corner region in which the risk of a short circuit or a collapse is high. For example, the end insulating layer 220 may cover only an upper end of each corner region, only a lower end of each corner region, or only a central portion of each corner region in the direction of laminating.

### (Embodiment 3)

The following describes Embodiment 3.

A battery according to Embodiment 3 differs from the battery according to Embodiment 1 in position of the counter-electrode leads and the electrode leads. The following gives a description with a focus on differences from Embodiment 1, and omits or simplifies a description of common features.

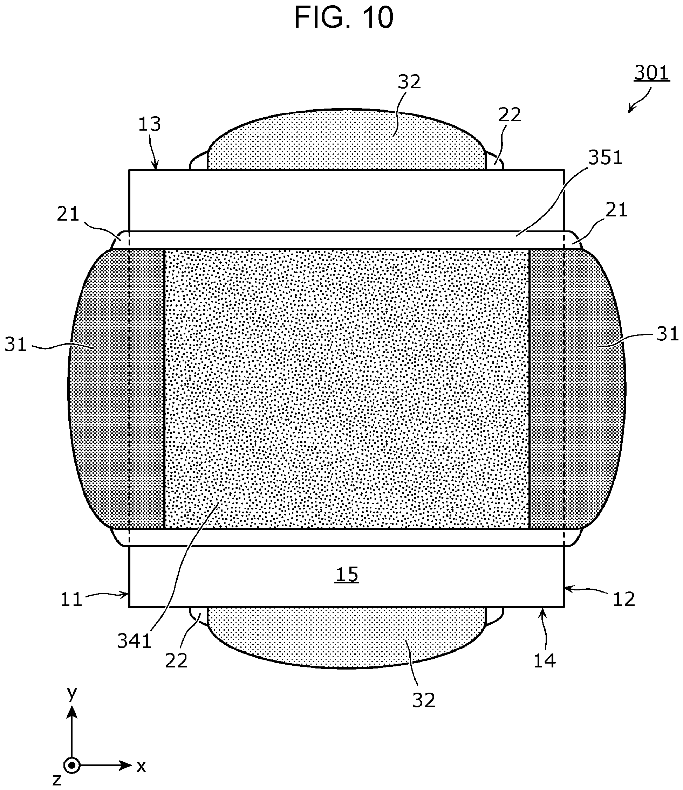

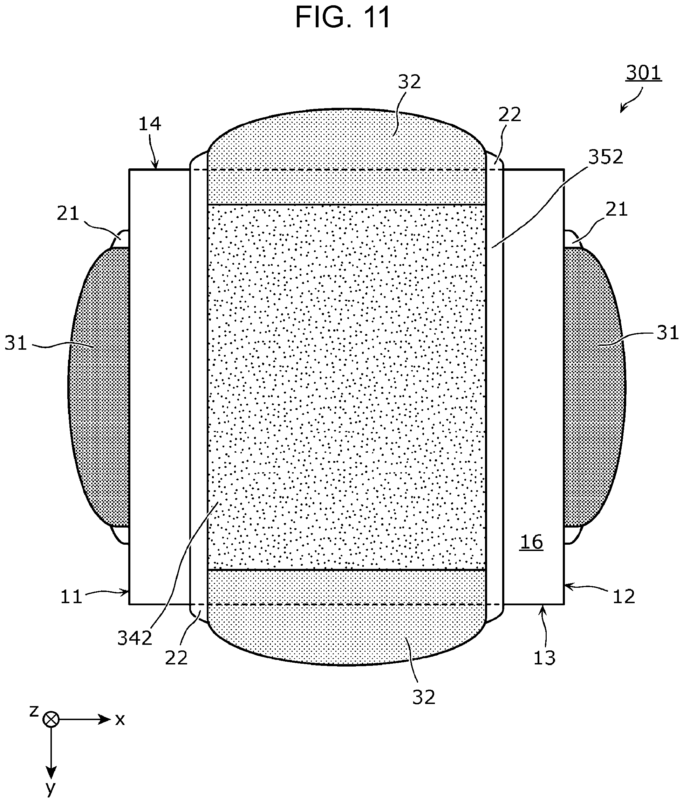

Fig. 10 is a top view of a battery 301 according to the present embodiment. Fig. 11 is a bottom view of the battery 301 according to the present embodiment. As shown in Figs. 10 and 11, in comparison with the battery 1, the battery 301 includes a counter-electrode conductor 341, an electrode conductor 342, and insulating layers 351 and 352 instead of the counter-electrode conductor 41, the electrode conductor 42, and the insulating layer 52.

In the present embodiment, the counter-electrode leads 31 are provided on the side surfaces 11 and 12, which face each other, respectively. The electrode leads 32 are provided on the side surfaces 13 and 14, which face each other, respectively. That is, in the present embodiment, the side surfaces 11 and 12 are examples of the first side surfaces on which the counter-electrode leads 31 are provided, and the side surfaces 13 and 14 are examples of the second side surfaces on which the electrode leads 32 are provided. The first side surfaces and the second side surfaces are alternately arranged along a circumferential direction of the power-generating element 10 in planar view.

The counter-electrode conductor 341 is provided at the principal surface 15. As shown in Fig. 10, the counter-electrode conductor 341 has a width equal to the width (i.e. the length in the y-axis direction) of each of the counter-electrode leads 31. For example, the counter-electrode conductor 341 can be formed to be so large as to occupy half or more than half of the principal surface 15. This makes it possible to decrease the resistance of the counter-electrode conductor 341, making it possible to enhance large-current characteristics.

The electrode conductor 342 is provided at the principal surface 16. As shown in Fig. 11, the electrode conductor 342 has a width equal to the width (i.e. the length in the y-axis direction) of each of the electrode leads 32. For example, the electrode conductor 342 can be formed to be so large as to occupy half or more than half of the principal surface 16. This makes it possible to decrease the resistance of the electrode conductor 342, making it possible to enhance large-current characteristics.

The counter-electrode conductor 341 and the electrode conductor 342 are different in placement and shape from, but are identical in function, material, or other respects to, the counter-electrode conductor 41 and the electrode conductor 42 according to Embodiment 1.

The insulating layer 351 is an example of the first insulating layer and is disposed between the counter-electrode conductor 341 and the principal surface 15 of the power-generating element 10. The insulating layer 351 is for example formed to be larger than the counter-electrode conductor 341 so that the counter-electrode conductor 341 does not make contact with the principal surface 15, i.e. the counter-electrode collector 121 located at the uppermost layer. This makes it possible to inhibit an electric current from concentrating on the counter-electrode collector 121 located at the uppermost layer, making it possible to inhibit delamination due to increase in temperature and early deterioration of the battery cell 100 located at the uppermost layer.

Since the counter-electrode conductor 341 and the counter-electrode collector 121 located at the uppermost layer are of the same polarity, they do not become short-circuited even when in contact with each other. For this reason, the insulating layer 351 does not need to be provided.

The insulating layer 352 is an example of the second insulating layer and is disposed between the electrode conductor 342 and the principal surface 16 of the power-generating element 10. The insulating layer 352 is for example formed to be larger than the electrode conductor 342 so that the electrode conductor 342 does not make contact with the principal surface 16, i.e. the counter-electrode collector 121 located at the lowermost layer. This makes it possible to reduce the occurrence of a short circuit due to contact between the electrode conductor 342 and the counter-electrode collector 121.

The insulating layers 351 and 352 are each made of an insulating material possessing electrical insulating properties. For example, the insulating layers 351 and 352 contain resin. Examples of the resin include, but are not limited to, epoxy resin. As the insulating material, an inorganic material may be used. A usable insulating material is selected on the basis of various properties such as flexibility, gas barrier properties, impact resistance, and thermal resistance.

As noted above, the battery 301 according to the present embodiment, the counter-electrode conductor 341 and the electrode conductor 342 can be placed away from each other. This makes it possible to reduce the occurrence of a short circuit. Further, the areas of the counter-electrode conductor 341 and the electrode conductor 342 can be increased. This makes it possible to decrease the resistance of each of the counter-electrode and electrode conductors 341 and 342, making it possible to enhance large-current characteristics.

### (Embodiment 4)

The following describes Embodiment 4.

A battery according to Embodiment 4 differs from the battery according to Embodiment 1 in that a counter-electrode conductor and an electrode conductor are provided at side surfaces of the power-generating element. The following gives a description with a focus on differences from Embodiment 1, and omits or simplifies a description of common features.

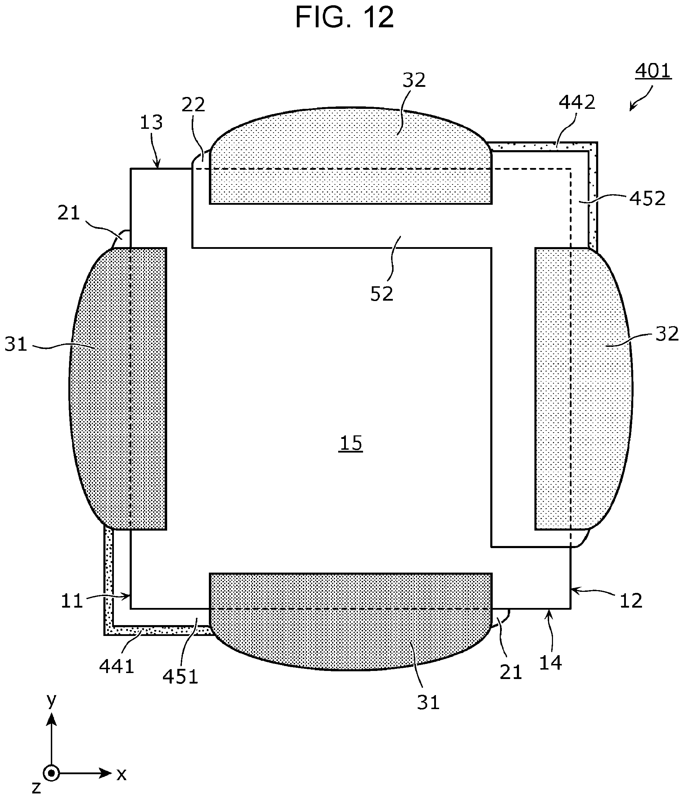

Fig. 12 is a top view of a battery 401 according to the present embodiment. As shown in Fig. 12, in comparison with the battery 1, the battery 401 includes a counter-electrode conductor 441 and an electrode conductor 442 instead of the counter-electrode conductor 41 and the electrode conductor 42. Further, the battery 401 includes end insulating layers 451 and 452.

The counter-electrode conductor 441 is provided at the side surfaces 11 and 14 and connected to counter-electrode leads 31 provided separately on each of the side surfaces 11 and 14. The counter-electrode conductor 441 is not in contact with the side surfaces 11 and 14 of the power-generating element 10. That is, the end insulating layer 451 is provided between the counter-electrode conductor 441 and each of the side surfaces 11 and 14. The counter-electrode conductor 441 covers the end insulating layer 451 on the side surfaces 11 and 14.

The electrode conductor 442 is provided at the side surfaces 12 and 13 and connected to electrode leads 32 provided separately on each of the side surfaces 12 and 13. The electrode conductor 442 is not in contact with the side surfaces 12 and 13 of the power-generating element 10. That is, the end insulating layer 452 is provided between the electrode conductor 442 and each of the side surfaces 12 and 13. The electrode conductor 442 covers the end insulating layer 452 on the side surfaces 12 and 13.

The counter-electrode conductor 441 and the electrode conductor 442 are different in placement and shape from, but are identical in function, material, or other respects to, the counter-electrode conductor 41 and the electrode conductor 42 according to Embodiment 1.

The end insulating layer 451 is an example of the end insulating member and covers connected portions, i.e. corner portions, of the adjacent side surfaces 11 and 14 of the power-generating element 10. Specifically, the end insulating layer 451 covers a corner region of each of the side surfaces 11 and 14. The end insulating layer 451 is disposed between the counter-electrode conductor 441 and the side surfaces 11 and 14 so that the counter-electrode conductor 441 does not make contact with the power-generating element 10.

The end insulating layer 452 is an example of the end insulating member and covers connected portions, i.e. corner portions, of the adjacent side surfaces 12 and 13 of the power-generating element 10. Specifically, the end insulating layer 452 covers a corner region of each of the side surfaces 12 and 13. The end insulating layer 452 is disposed between the electrode conductor 442 and the side surfaces 12 and 13 so that the electrode conductor 442 does not make contact with the power-generating element 10.

The end insulating layers 451 and 452 are each made of an insulating material possessing electrical insulating properties. For example, the end insulating layers 451 and 452 contain resin. Examples of the resin include, but are not limited to, epoxy resin. As the insulating material, an inorganic material may be used. A usable insulating material is selected on the basis of various properties such as flexibility, gas barrier properties, impact resistance, and thermal resistance.

In the present embodiment, the end insulating layer 451 is formed integrally with the electrode insulating layer 21. Further, the end insulating layer 452 is formed integrally with the counter-electrode insulating layer 22. Specifically, the end insulating layers 451 and 452 are made of the same material as the electrode insulating layer 21 and the counter-electrode insulating layer 22. Alternatively, the end insulating layers 451 and 452 may be made of a different material from the electrode insulating layer 21 and the counter-electrode insulating layer 22.

As noted above, the battery 401 according to the present embodiment makes it possible to connect the plurality of counter-electrode leads 31 through the counter-electrode conductor 441, which is provided so as to wrap around corner portions of the power-generating element 10 while protecting the corner portions, and connect the plurality of electrode leads 32 through the electrode conductor 442, which is provided so as to wrap around corner portions of the power-generating element 10 while protecting the corner portions.

### (Embodiment 5)

A battery according to Embodiment 5 differs from the battery according to Embodiment 1 in that a lead is made of a plurality of different materials. The following gives a description with a focus on differences from Embodiment 1, and omits or simplifies a description of common features.

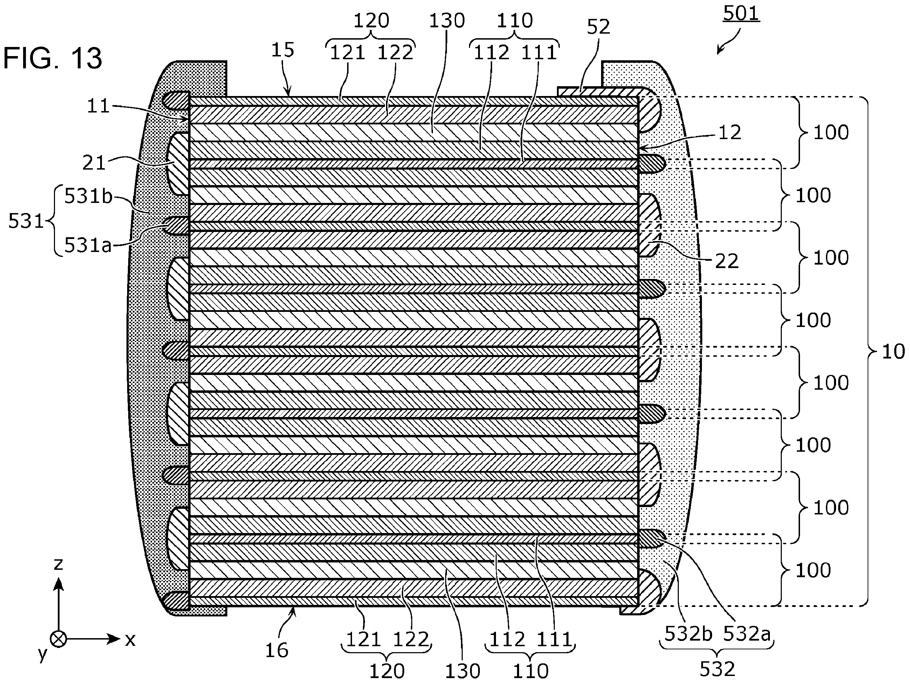

Fig. 13 is a cross-sectional view of a battery 501 according to the present embodiment. As shown in Fig. 13, in comparison with the battery 1 according to Embodiment 1, the battery 501 includes counter-electrode leads 531 and electrode leads 532 instead of the counter-electrode leads 31 and the electrode leads 32.

Each of the counter-electrode leads 531 includes a first conductive member 531a and a second conductive member 531b. The second conductive member 531b is the same as the counter-electrode leads 31 according to Embodiment 1 except that the second conductive member 531b covers the first conductive member 531a. In the present embodiment, a plurality of the second conductive members 531b provided separately on each of the plurality of side surfaces 11 and 14 are connected via the counter-electrode conductor 41 (not illustrated).

The first conductive member 531a is a conductive member covering at least part of the counter-electrode layer 120 on the side surfaces 11 and 14. Specifically, the first conductive member 531a is in contact with and covers an end face of the counter-electrode collector 121 and part of an end face of the counter-electrode active material layer 122. For example, the first conductive member 531a is provided for each counter-electrode collector 121 and covers the whole end face of the counter-electrode collector 121. The first conductive member 531a has a striped shape in a planar view of the side surface 11 or 14. On each of the side surfaces 11 and 14, the first conductive member 531a and the electrode insulating layer 21 are alternately arranged one by one along the z-axis direction.

A plurality of the first conductive members 531a are covered with and electrically connected to the second conductive member 531b. That is, the counter-electrode layers 120 of the plurality of battery cells 100 are electrically connected to the second conductive member 531b via each separate first conductive member 531a and electrically connected in parallel via the second conductive member 531b.

The first conductive member 531a have different properties from the second conductive member 531b. For example, the first conductive member 531a and the second conductive member 531b are made of different materials. Specifically, the first conductive member 531a is made of a material selected with a focus on high conductivity, alloying with the counter-electrode collector 121, or other properties. Further, the second conductive member 531b is made of a material selected with a focus on flexibility, impact resistance, chemical stability, cost, construction spreadability, or other properties.

Each of the electrode leads 532 includes a first conductive member 532a and a second conductive member 532b. The second conductive member 532b is the same as the electrode leads 32 according to Embodiment 1 except that the second conductive member 532b covers the first conductive member 532a. In the present embodiment, a plurality of the second conductive members 532b provided separately on each of the plurality of side surfaces 12 and 13 are connected via the electrode conductor 42 (not illustrated).

The first conductive member 532a is a conductive member covering at least part of the electrode layer 110 on the side surfaces 12 and 13. Specifically, the first conductive member 532a is in contact with and covers an end face of the electrode collector 111 and part of an end face of the electrode active material layer 112. For example, the first conductive member 532a is provided for each electrode collector 111 and covers the whole end face of the -electrode collector 111. The first conductive member 532a has a striped shape in a planar view of the side surface 12 or 13. On each of the side surfaces 12 and 13, the first conductive member 532a and the counter-electrode insulating layer 22 are alternately arranged one by one along the z-axis direction.

A plurality of the first conductive members 532a are covered with and electrically connected to the second conductive member 532b. That is, the electrode layers 110 of the plurality of battery cells 100 are electrically connected to the second conductive member 532b via each separate first conductive member 532a and electrically connected in parallel via the second conductive member 532b.

The first conductive member 532a have different properties from the second conductive member 532b. For example, the first conductive member 532a and the second conductive member 532b are made of different materials. Specifically, the first conductive member 532a is made of a material selected with a focus on high conductivity, alloying with the electrode collector 111, or other properties. Further, the second conductive member 532b is made of a material selected with a focus on flexibility, impact resistance, chemical stability, cost, construction spreadability, or other properties.

As noted above, the leads of the battery 501 can be made of appropriate materials. This makes it possible to bring about improvement in battery performance and enhance battery manufacturability.

Although Fig. 13 has illustrated an example in which a first conductive member 531a is connected to every counter-electrode collector 121, there may be a counter-electrode collector 121 to which no first conductive member 531a is connected. Further, the same applies to the electrode collector 111. Further, either the first conductive member 531a or 532a does not need to be provided.

### (Embodiment 6)

The following describes Embodiment 6.

A battery according to Embodiment 6 differs from the battery according to Embodiment 1 in that the battery according to Embodiment 6 further includes collector terminals. The following gives a description with a focus on differences from Embodiment 1, and omits or simplifies a description of common features.

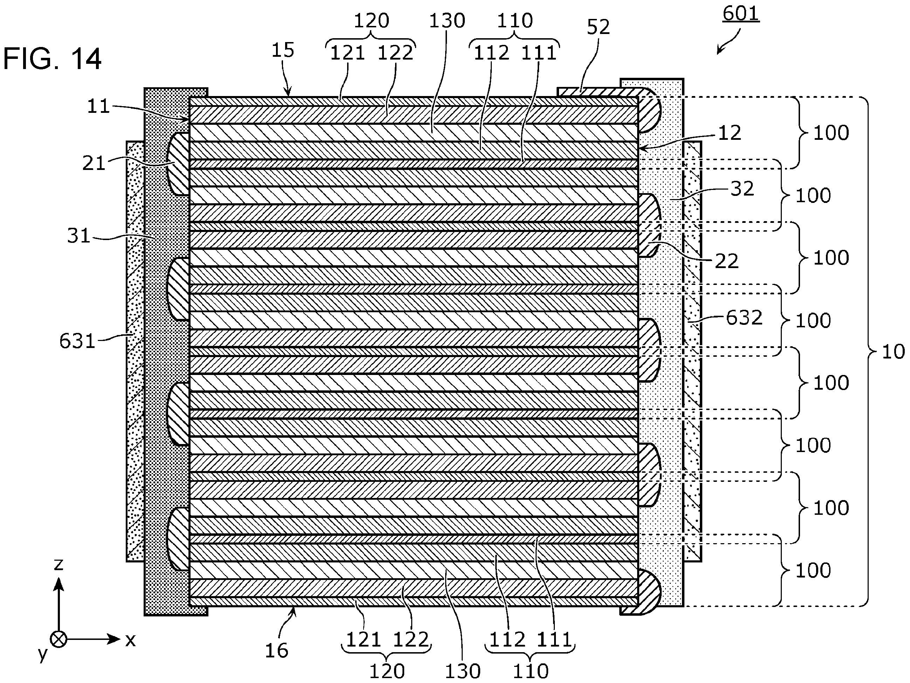

Fig. 14 is a cross-sectional view of a battery 601 according to the present embodiment. It should be noted that a plan view of the battery 601 is the same as a plan view of the battery 1 shown in Fig. 2. Fig. 14 represents a cross-section taken along line IC-IC in Fig. 2.

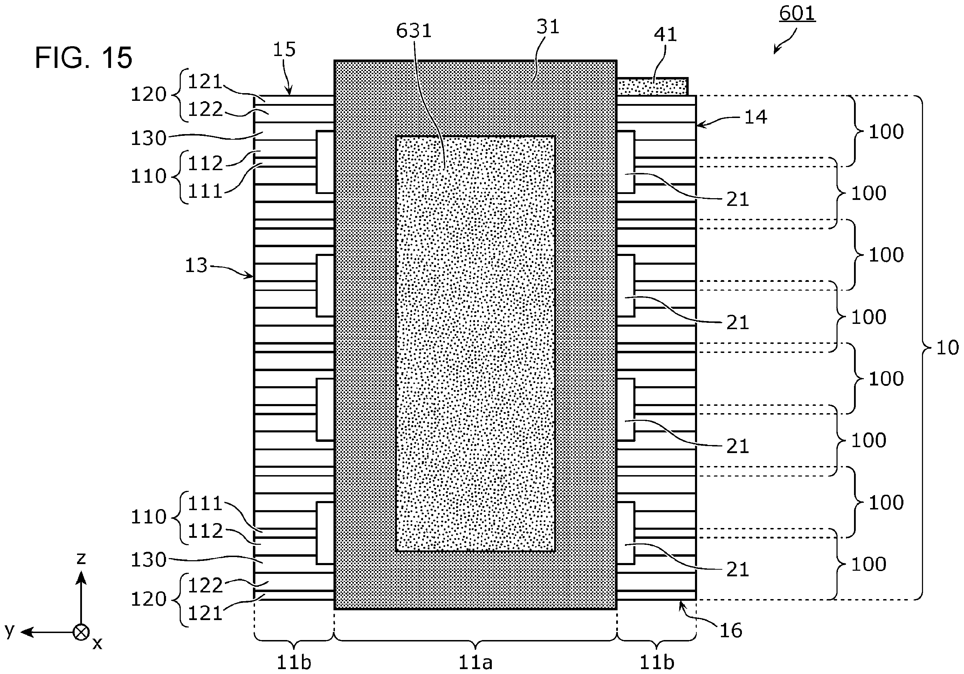

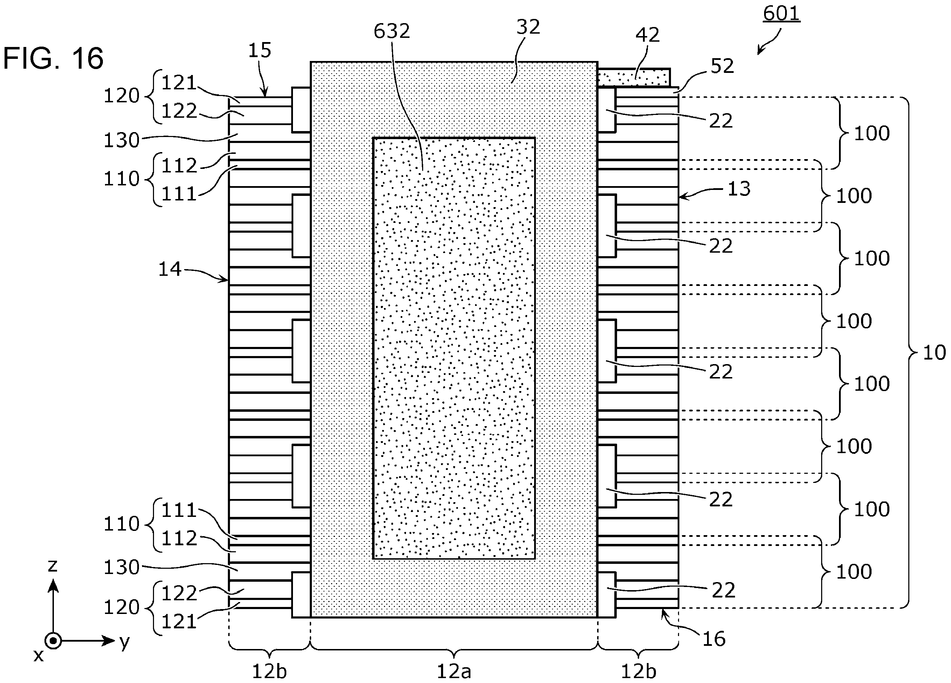

Figs. 15 and 16 are side views of the battery 601 according to the present embodiment. Specifically, Fig. 15 represents the battery 601 as viewed from the front of the side surface 11. Fig. 16 represents the battery 601 as viewed from the front of the side surface 12. Figs. 15 and 16 omit to illustrate the counter-electrode insulating layer 22 and the electrode lead 32 that are provided on the side surface 13, an electrode collector terminal 632 provided at the side surface 13, the electrode insulating layer 21 and the counter-electrode lead 31 that are provided on the side surface 14, and a counter-electrode collector terminal 631 provided at the side surface 14.

As shown in Figs. 14 to 16, in comparison with the battery 1 according to Embodiment 1, the battery 601 according to the present embodiment includes a counter-electrode collector terminal 631 and an electrode collector terminal 632.

The counter-electrode collector terminal 631 is a conducting terminal connected to the counter-electrode lead 31. The counter-electrode collector terminal 631 is one of external connecting terminals of the battery 601 and, in the present embodiment, is a positive-electrode lead terminal. As shown in Figs. 14 and 15, the counter-electrode collector terminal 631 is disposed in the central region 11a of the side surface 11 of the power-generating element 10 to cover a surface of the counter-electrode lead 31.

The electrode collector terminal 632 is a conducting terminal connected to the electrode lead 32. The electrode collector terminal 632 is one of the external connecting terminals of the battery 601 and, in the present embodiment, is a negative-electrode lead terminal. As shown in Figs. 14 and 16, the electrode collector terminal 632 is disposed in the central region 12a of the side surface 12 of the power-generating element 10 to cover a surface of the electrode lead 32.

The counter-electrode collector terminal 631 and the electrode collector terminal 632 are each made of a material possessing electrical conductivity. For example, the counter-electrode collector terminal 631 and the electrode collector terminal 632 are metal foil or metal plates made of metal such as copper, aluminum, or stainless steel. Alternatively, the counter-electrode collector terminal 631 and the electrode collector terminal 632 may be hardened solder.

In the present embodiment, the counter-electrode collector terminal 631 and the electrode collector terminal 632 are connected not to the counter-electrode lead 31 and the electrode lead 32 but to a wiring pattern provided on a printed circuit board on which the battery 601 is mounted. The connections are for example reflow solder connections.

The counter-electrode collector terminal 631 and the electrode collector terminal 632 can be made of a material that is different in property from that of which the counter-electrode lead 31 and the electrode lead 32 are made. For example, as the material of which the counter-electrode lead 31 and the electrode lead 32 are made, a material can be selected with a focus on having high conductivity, alloying with metal contained in a collector, or other properties. As the material of which the counter-electrode collector terminal 631 and the electrode collector terminal 632 are made, a material can be selected with a focus on thermal resistance, mountability, strength, flexibility, impact resistance, chemical stability, cost, construction spreadability, or other properties. In this way, a suitable material can be selected for each member. This makes it possible to bring about improvement in performance of the battery 601 and enhance the manufacturability of the battery 601.

Although the counter-electrode collector terminal 631 is provided to cover only part of the counter-electrode lead 31 in a planar view of the side surface 11, the counter-electrode collector terminal 631 may cover the whole of the counter-electrode lead 31. For example, the counter-electrode collector terminal 631 may be larger than the counter-electrode lead 31 in a planar view of the side surface 11. The same applies to the electrode collector terminal 632.

### (Embodiment 7)

The following describes Embodiment 7.

A battery according to Embodiment 7 differs from the battery according to Embodiment 1 in that the battery according to Embodiment 7 includes a sealing member. The following gives a description with a focus on differences from Embodiment 1, and omits or simplifies a description of common features.

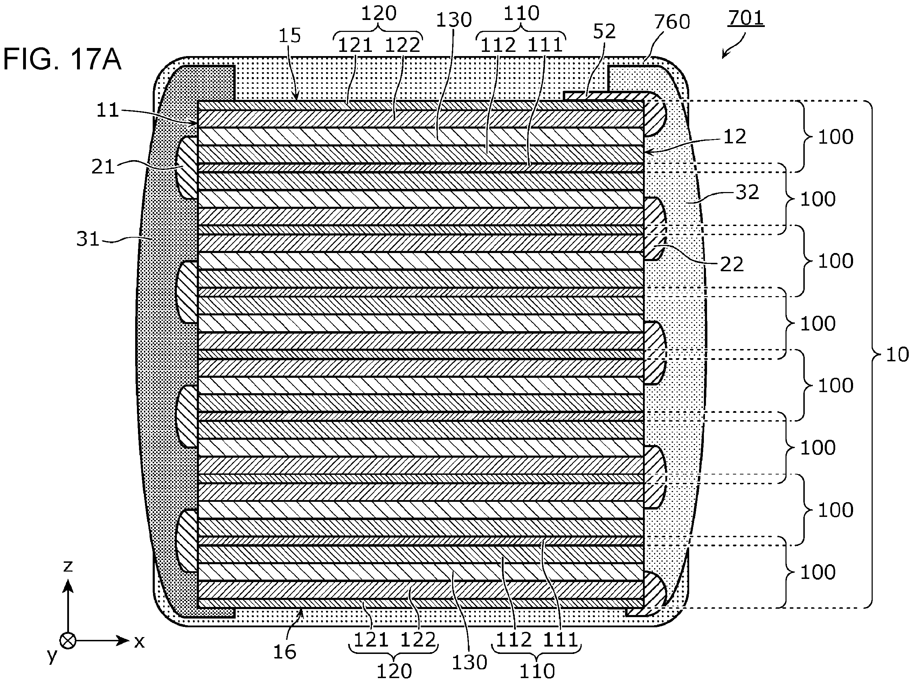

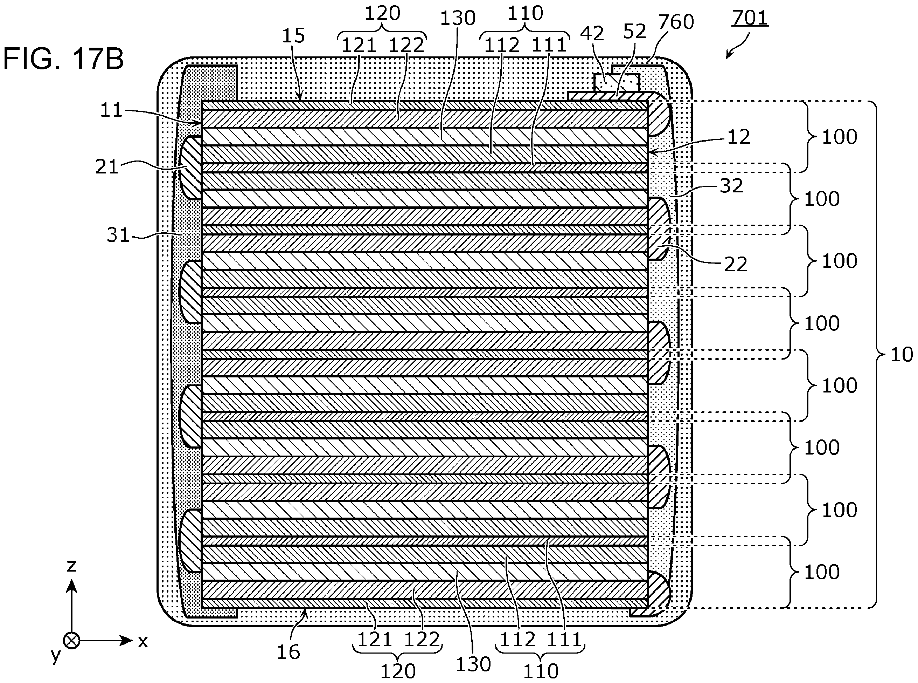

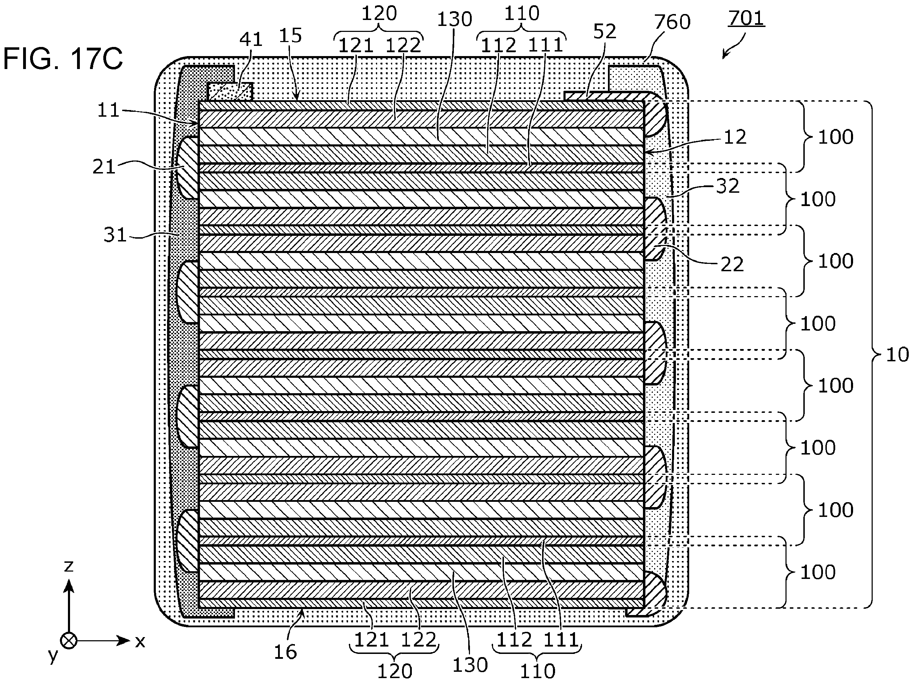

Figs. 17A, 17B, and 17C are cross-sectional views of a battery 701 according to the present embodiment. It should be noted that a top view of the battery 701 with a sealing member 760 seen through is the same as the top view of the battery 1 shown in Fig. 2. Figs. 17A, 17B, and 17C correspond to cross-sections taken along line IA-IA, line IB-IB, and line IC-IC in Fig. 2, respectively. As shown in Figs. 17A to 17C, in comparison with the battery 1 according to Embodiment 1, the battery 701 includes the sealing member 760.

The sealing member 760 exposes at least part of the counter-electrode lead 31 and at least part of the electrode lead 32 and seals the power-generating element 10. In this case, as shown in Figs. 17B and 17C, the sealing member 760 may cover part of the counter-electrode lead 31 and part of the electrode lead 32. The sealing member 760 is for example provided so that the power-generating element 10, the electrode insulating layer 21, the counter-electrode insulating layer 22, the counter-electrode conductor 41, and the electrode conductor 42 are not exposed.

The sealing member 760 is for example made of an insulating material possessing electrical insulating properties. A usable example of the insulating material is a common publicly-known material for a sealing member in a battery. A usable example of the insulating material is a resin material. It should be noted that the insulating material may be a material possessing insulating properties and not possessing ion conductivity. For example, the insulating material may be at least one of epoxy resin, acrylic resin, polyimide resin, and silsesquioxane.

It should be noted that the sealing member 760 may contain a plurality of different insulating materials. For example, the sealing member 760 may have a multilayer structure. Layers of the multilayer structure may be made of different materials and have different properties.

The sealing member 760 may contain a particulate metal oxide material. Usable examples of the metal oxide material include silicon oxide, aluminum oxide, titanium oxide, zinc oxide, cerium oxide, ferric oxide, tungsten oxide, zirconium oxide, calcium oxide, zeolite, and glass. For example, the sealing member 760 may be made of a resin material in which a plurality of particles made of the metal oxide material are dispersed.

The particle size of the metal oxide material needs only be less than or equal to a spacing between the electrode collector 111 and the counter-electrode collector 121. Examples of the particle shape of the metal oxide material include, but are not limited to, a spherical shape, an oval spherical shape, and a rod shape.

Providing the sealing member 760 makes it possible to improve the reliability of the battery 701 in various respects such as mechanical strength, short-circuit prevention, and moisture prevention.

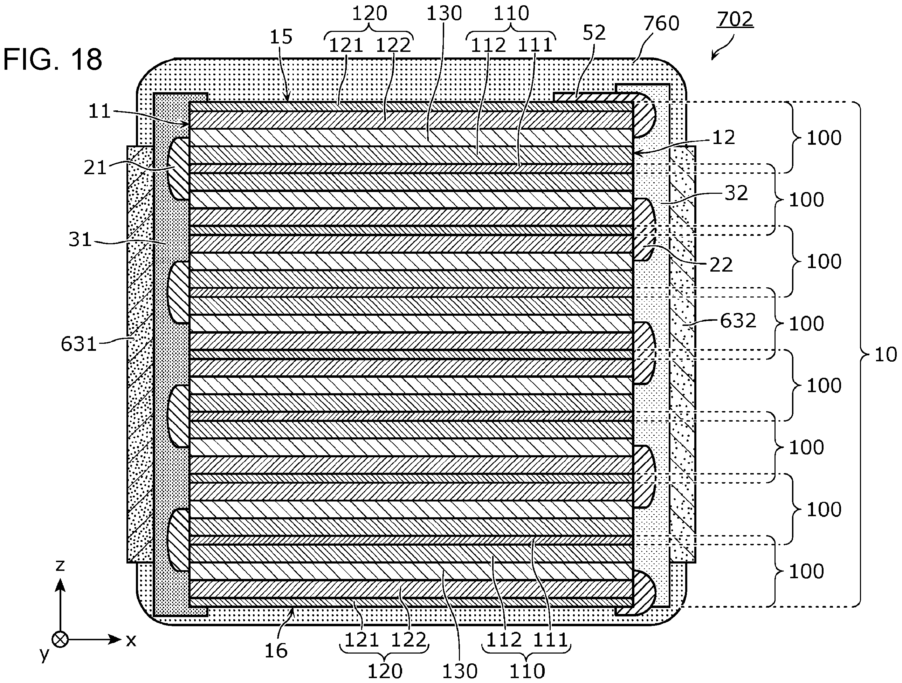

Although an example in which the battery 1 according to Embodiment 1 includes a sealing member 760 has been illustrated here, a battery according to another embodiment may too include a sealing member 760. For example, as in the case of a battery 702 shown in Fig. 18, the battery 601 according to Embodiment 6 may include a sealing member 760. Fig. 18 is a cross-sectional view of the battery 702 according to another example of the present embodiment.

In the battery 702 shown in Fig. 18, the sealing member 760 exposes the counter-electrode collector terminal 631 and the electrode collector terminal 632 and covers the power-generating element 10, the electrode insulating layer 21, the counter-electrode insulating layer 22, the counter-electrode lead 31, the electrode lead 32, the counter-electrode conductor 41 (not illustrated), and the electrode conductor 42 (not illustrated).

### (Embodiment 8)

The following describes Embodiment 8.

A battery according to Embodiment 8 differs from the battery according to Embodiment 1 in that a collector included in a battery cell projects further than an active material layer. The following gives a description with a focus on differences from Embodiment 1, and omits or simplifies a description of common features.

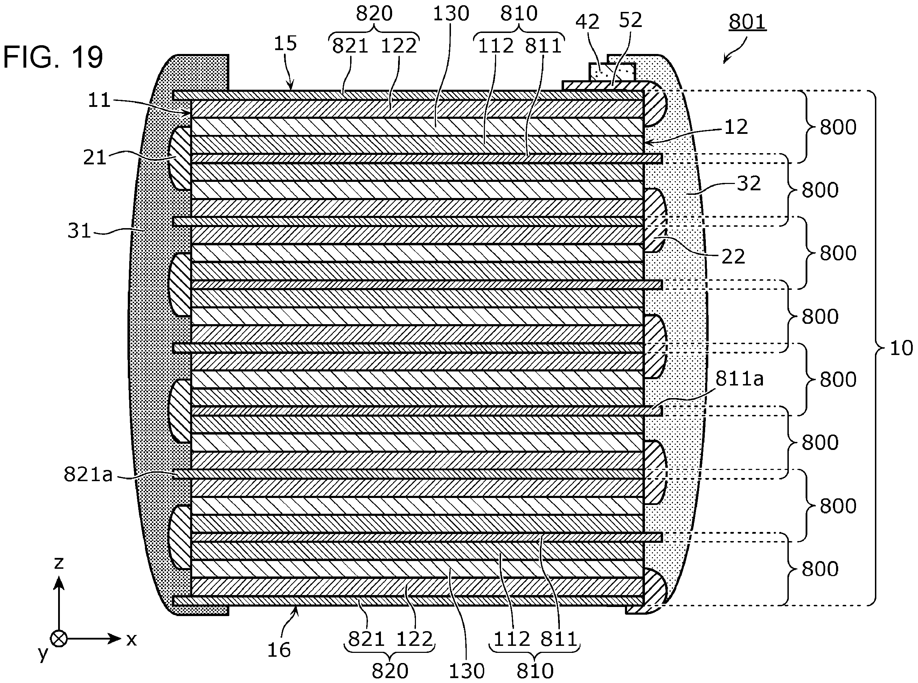

Fig. 19 is a cross-sectional view of a battery 801 according to the present embodiment. As shown in Fig. 19, in comparison with the battery 1 shown in Figs. 1A to 1C, the power-generating element 10 of the battery 801 includes battery cells 800 instead of the battery cells 100.

Each of the plurality of battery cells 800 includes an electrode layer 810, a counter-electrode layer 820, and a solid electrolyte layer 130. The electrode layer 810 includes an electrode collector 811 and an electrode active material layer 112. The counter-electrode layer 820 includes a counter-electrode collector 821 and a counter-electrode active material layer 122.

As shown in Fig. 19, at the side surface 11, the counter-electrode collector 821 projects further than the counter-electrode active material layer 122. Although not shown in Fig. 19, the same applies to the side surface 14. In the present embodiment, at the side surfaces 11 and 14, end faces of the counter-electrode active material layer 122, the solid electrolyte layer 130, the electrode active material layer 112, and the electrode collector 811 are flush with one another and form flat surfaces. The counter-electrode collector 821 projects outward from the flat surfaces. The term "outward" here means a direction away from the center of the power-generating element 10 and, when based on the side surface 11, corresponds to a negative direction of the x axis.

The projection of the counter-electrode collector 821 causes the counter-electrode lead 31 to make contact with a principal surface of a projecting portion 821a of the counter-electrode collector 821. It should be noted that the projecting portion 821a is a portion of the counter-electrode collector 821 located further on a negative side of the x axis than an end face of the counter-electrode active material layer 122 on the negative side of the x axis. This makes it possible to increase the area of contact between the counter-electrode lead 31 and the counter-electrode collector 821, making it possible to decrease the resistance of connection between the counter-electrode lead 31 and the counter-electrode collector 821.

There is no particular limit in the amount of projection of the counter-electrode collector 821, i.e. the length of the projecting portion 821a in the x-axis direction. For example, the amount of projection of the counter-electrode collector 821 is 4.5 or more times as great as the thickness of the counter-electrode collector 821 (i.e. the length in the z-axis direction). Thus, in the present embodiment, the counter-electrode lead 31 is in contact with both principal surfaces of the projecting portion 821a. This makes it possible to make the area of contact ten or more times larger than in a case where the counter-electrode collector 821 does not project.

Alternatively, the amount of projection of the counter-electrode collector 821 may be nine or more times as great as the thickness of the counter-electrode collector 821. This makes it possible to, even in a case were the counter-electrode lead 31 is in contact with only one principal surface of the projecting portion 821a, make the area of contact ten or more times larger than in a case where the counter-electrode collector 821 does not project.

In the present embodiment, at the side surface 12, the electrode collector 811 too has a similar configuration. That is, at the side surface 12, the electrode collector 811 projects further than the electrode active material layer 112. Although not shown in Fig. 19, the same applies to the side surface 13. In the present embodiment, at the side surfaces 12 and 13, end faces of the electrode active material layer 112, the solid electrolyte layer 130, the counter-electrode active material layer 122, and the counter-electrode collector 821 are flush with one another and form flat surfaces. The electrode collector 811 projects outward (specifically, in a positive direction of the x axis) from the flat surfaces.

The projection of the electrode collector 811 causes the electrode lead 32 to make contact with a principal surface of a projecting portion 811a of the electrode collector 811. It should be noted that the projecting portion 811a is a portion of the electrode collector 811 located further on a positive side of the x axis than an end face of the electrode active material layer 112 on the positive side of the x axis. This makes it possible to increase the area of contact between the electrode lead 32 and the electrode collector 811, making it possible to decrease the resistance of connection between the electrode lead 32 and the electrode collector 811.

There is no particular limit in the amount of projection of the electrode collector 811, i.e. the length of the projecting portion 811a in the x-axis direction. For example, as in the case of the counter-electrode collector 821, the amount of projection of the electrode collector 811 may be 4.5 or more times or nine or more times as great as the thickness of the electrode collector 811.

The projecting portions 811a and 821a are each formed by not placing the counter-electrode active material layer 122 or the electrode active material layer 112 at an end of a collector. Alternatively, the projecting portions 811a and 821a are each formed by forming the counter-electrode active material layer 122 or the electrode active material layer 112 on the whole surface of a collector and then removing an end of the counter-electrode active material layer 122 or the electrode active material layer 112. This removal is carried out, for example, by cutting just short of the collector, grinding, sandblasting, brushing, etching, or plasma irradiation so that only the collector remains. At this point in time, part of the counter-electrode active material layer 122 or the electrode active material layer 112 may remain without being removed.

As noted above, the battery 801 according to the present embodiment causes an increase in area of contact between a collector and a lead, thus causing a decrease in resistance of connection between the collector and the lead. This makes it possible to improve the large-current characteristics of the battery 801 and, for example, makes fast charging possible.

Although the present embodiment has illustrated an example in which both the counter-electrode collector 821 and the electrode collector 811 project, only either of them may project.

Further, the aforementioned configuration in which a collector projects may be applied to the battery 301 according to Embodiment 3. In this case, the counter-electrode collector 821 projects from the side surfaces 11 and 12, and the electrode collector 811 projects from the side surfaces 13 and 14.

Further, a collector does not need to project from one of the side surfaces on which the leads are provided. For example, the counter-electrode collector 821 projects only from the side surface 11, and the counter-electrode collector 821 does not need to project from the side surface 14. The same applies to the electrode collector 811.

### (Embodiment 9)

The following describes Embodiment 9.

A battery according to Embodiment 9 differs from the battery according to Embodiment 1 in that at a side surface of a power-generating element, an active material layer or other layers not covered with an insulating layer recedes further than a collector. The following gives a description with a focus on differences from Embodiment 1, and omits or simplifies a description of common features.

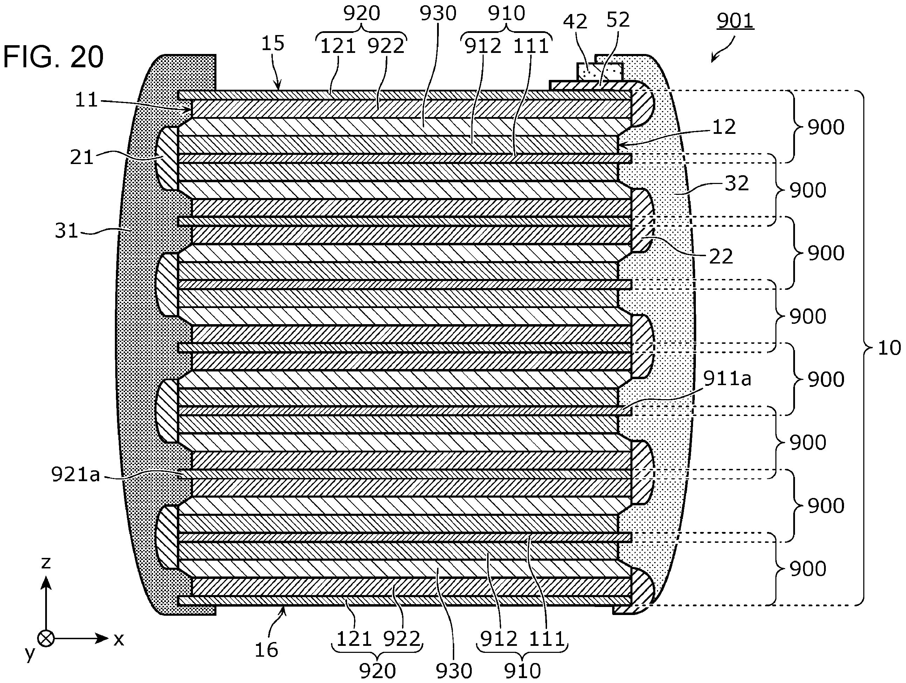

Fig. 20 is a cross-sectional view of a battery 901 according to the present embodiment. As shown in Fig. 20, in comparison with the battery 1 shown in Figs. 1A to 1C, the power-generating element 10 of the battery 901 includes battery cells 900 instead of the battery cells 100.

Each of the plurality of battery cells 900 includes an electrode layer 910, a counter-electrode layer 920, and a solid electrolyte layer 930. The electrode layer 910 includes an electrode collector 111 and an electrode active material layer 912. The counter-electrode layer 920 includes a counter-electrode collector 121 and a counter-electrode active material layer 922.

As shown in Fig. 20, at the side surface 11, the counter-electrode active material layer 922 recedes further than the electrode layer 910. Further, the counter-electrode active material layer 922 recedes further than the counter-electrode collector 121. Specifically, the counter-electrode active material layer 922 is depressed further inward than both the electrode layer 910 and the counter-electrode collector 121. Although not shown in Fig. 20, the same applies to the side surface 14. The term "inward" here means a direction toward the center of the power-generating element 10 and, when based on the side surface 11, corresponds to the positive direction of the x axis.

In the present embodiment, at the side surfaces 11 and 14, at least part of the solid electrolyte layer 930 recedes further than the electrode layer 910. Specifically, a portion of an end face of the solid electrolyte layer 930 not covered with the electrode insulating layer 21 is inclined with respect to the z-axis direction.

The recession of the counter-electrode active material layer 922 causes the counter-electrode collector 121 to relatively project. The projection of the counter-electrode collector 121 causes the counter-electrode lead 31 to make contact with a principal surface of a projecting portion 921a of the counter-electrode collector 121. This makes it possible to increase the area of contact between the counter-electrode lead 31 and the counter-electrode collector 121, making it possible to decrease the resistance of connection between the counter-electrode lead 31 and the counter-electrode collector 121.

There is no particular limit in the amount of recession of the counter-electrode active material layer 922, i.e. the amount of projection of the counter-electrode collector 121. For example, as in the case of Embodiment 8, the amount of recession of the counter-electrode active material layer 922 may be 4.5 or more times or nine or more times as great as the thickness of the counter-electrode collector 121.

In the present embodiment, at the side surface 12, the electrode active material layer 912 too has a similar configuration. That is, at the side surface 12, the electrode active material layer 912 recedes further than the counter-electrode layer 920. Further, the electrode active material layer 912 recedes further than the electrode collector 111. Specifically, the electrode active material layer 912 recedes further inward (specifically, in the negative direction of the x axis) than both the counter-electrode layer 920 and the electrode collector 111. Although not shown in Fig. 20, the same applies to the side surface 13.

In the present embodiment, at the side surfaces 12 and 13, at least part of the solid electrolyte layer 930 recedes further than the counter-electrode layer 920. Specifically, a portion of an end face of the solid electrolyte layer 930 not covered with the counter-electrode insulating layer 22 is inclined with respect to the z-axis direction.

The recession of the electrode active material layer 912 causes the electrode collector 111 to relatively project. The projection of the electrode collector 111 causes the electrode lead 32 to make contact with a principal surface of a projecting portion 911a of the electrode collector 111. This makes it possible to increase the area of contact between the electrode lead 32 and the electrode collector 111, making it possible to decrease the resistance of connection between the electrode lead 32 and the electrode collector 111.

There is no particular limit in the amount of recession of the electrode active material layer 912, i.e. the amount of projection of the electrode collector 111. For example, as in the case of Embodiment 8, the amount of recession of the electrode active material layer 912 may be 4.5 or more times or nine or more times as great as the thickness of the electrode collector 111.

It should be noted that the recession of an active material layer is achieved by the same method as the method for achieving the projection of a collector in Embodiment 8. For example, the recession of the active material layer is achieved by cutting just short of the collector, grinding, sandblasting, brushing, etching, or plasma irradiation so that only the collector remains.

In the present embodiment, the electrode collector 111 and the counter-electrode collector 121 are the same in shape and size as each other and have their contours in conformance with each other in planar view. For this reason, as shown in Fig. 20, the electrode collector 111 and the counter-electrode collector 121 have their ends aligned in the z-axis direction in cross-sectional view. As will be described in detail in section "Manufacturing Method" below, en-bloc cutting of a layered product formed by laminating the plurality of battery cells 100 causes the electrode collector 111 and the counter-electrode collector 121 to have their contours in conformance with each other. After that, by causing the end faces of the active material layers to recede, the battery 901 according to the present embodiment is manufactured. In this way, the battery cells 900 can be subjected to simultaneous processing such as en-bloc cutting. This makes it possible to reduce variations in the characteristic of the battery cells 900.

As noted above, the battery 901 according to the present embodiment causes an increase in area of contact between a collector and a lead, thus causing a decrease in resistance of connection between the collector and the lead. This makes it possible to improve the large-current characteristics of the battery 901 and, for example, makes fast charging possible.

Although the present embodiment has illustrated an example in which both the counter-electrode active material layer 922 and the electrode active material layer 912 recede, only either of them may recede. Further, the solid electrolyte layer 930 does not need to recede at at least either the side surface 11 or 12.

Further, the aforementioned configuration in which a collector projects may be applied to the battery 301 according to Embodiment 3. In this case, the electrode collector 121 projects from the side surfaces 11 and 12, and the counter-electrode collector 111 projects from the side surfaces 13 and 14.

Further, a collector does not need to project from one of the side surfaces on which the leads are provided. For example, the counter-electrode collector 121 projects only from the side surface 11, and the counter-electrode collector 121 does not need to project from the side surface 14. The same applies to the electrode collector 111.

### (Embodiment 10)

The following describes Embodiment 10.

A battery according to Embodiment 10 differs from the battery according to Embodiment 1 in coverage by an electrode insulating layer and a counter-electrode insulating layer. The following gives a description with a focus on differences from Embodiment 1, and omits or simplifies a description of common features.

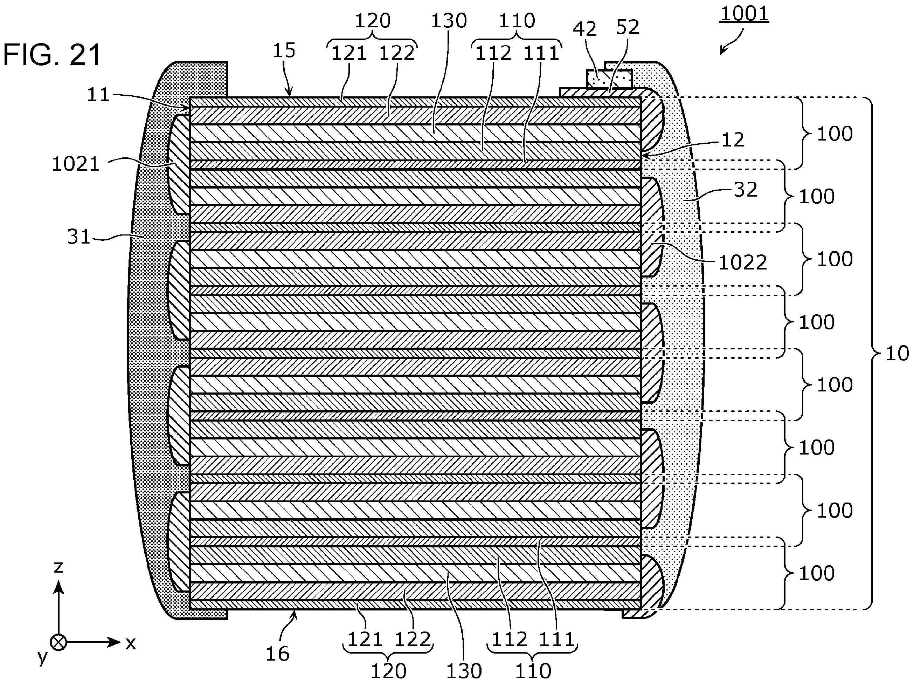

Fig. 21 is a cross-sectional view of a battery 1001 according to the present embodiment. As shown in Fig. 21, in comparison with the battery 1 shown in Figs. 1A to 1C, the battery 1001 includes an electrode insulating layer 1021 and a counter-electrode insulating layer 1022 instead of the electrode insulating layer 21 and the counter-electrode insulating layer 22.

As shown in Fig. 21, the electrode insulating layer 1021 covers part of the solid electrolyte layer 130 and part of the counter-electrode layer 120 as well as the electrode layer 110 on the side surface 11. That is, the electrode insulating layer 1021 covers an area from the electrode layer 110 to part of the counter-electrode layer 120. Specifically, the electrode insulating layer 1021 covers part of the counter-electrode active material layer 122. Although not shown in Fig. 21, the same applies to the side surface 14.

In the present embodiment, the electrode insulating layer 1021 continuously covers an area from at least part of the counter-electrode active material layer 122 of one of the two adjacent battery cells 100 to at least part of the counter-electrode active material layer 122 of the other of the two adjacent battery cells 100. For example, the electrode insulating layer 1021 completely covers one electrode collector 111, electrode active material layers 112 located on both sides of the electrode collector 111, and two solid electrolyte layers 130. For example, the contours of the electrode insulating layer 1021 overlap the counter-electrode active material layer 122 in a planar view of the side surface 11 or 14.

This drastically reduces the risk of exposing the electrode layer 110 even if there are fluctuations in width (length in the z-axis direction) due to variations in the manufacture of the electrode insulating layer 1021. This makes it possible to reduce the risk of a short circuit between the electrode layer 110 and the counter-electrode layer 120 via the counter-electrode lead 31. Further, the electrode insulating layer 1021 becomes embedded in asperities on an end face of the counter-electrode active material layer 122, bringing about improvement in adhesion strength of the electrode insulating layer 1021 and improvement in insulation reliability.

It should be noted that the electrode insulating layer 1021 may cover the whole of the counter-electrode active material layer 122 on the side surface 11 or 14. Specifically, the contours of the electrode insulating layer 1021 may overlap a boundary between the counter-electrode active material layer 122 and the counter-electrode collector 121.

In the present embodiment, on the side surface 12, the counter-electrode insulating layer 1022 too has a similar configuration. Specifically, the counter-electrode insulating layer 1022 covers part of the solid electrolyte layer 130 and part of the electrode layer 110 as well as the counter-electrode layer 120 on the side surface 12. That is, the counter-electrode insulating layer 1022 covers an area from the counter-electrode layer 120 to part of the electrode layer 110. Specifically, the counter-electrode insulating layer 1022 covers part of the electrode active material layer 112. Although not shown in Fig. 21, the same applies to the side surface 13.

In the present embodiment, the counter-electrode insulating layer 1022 continuously covers an area from at least part of the electrode active material layer 112 of one of the two adjacent battery cells 100 to at least part of the electrode active material layer 112 of the other of the two adjacent battery cells 100. For example, the counter-electrode insulating layer 1022 completely covers one counter-electrode collector 121, counter-electrode active material layers 122 located on both sides of the counter-electrode collector 121, and two solid electrolyte layers 130.

For example, the contours of the counter-electrode insulating layer 1022 overlap the electrode active material layer 112 in a planar view of the side surface 12 or 13. This drastically reduces the risk of exposing the counter-electrode layer 120 even if there are fluctuations in width (length in the z-axis direction) due to variations in the manufacture of the counter-electrode insulating layer 1022. This makes it possible to reduce the risk of a short circuit between the counter-electrode layer 120 and the electrode layer 110 via the electrode lead 32. Further, the counter-electrode insulating layer 1022 becomes embedded in asperities on an end face of the electrode active material layer 112, bringing about improvement in adhesion strength of the counter-electrode insulating layer 1022 and improvement in insulation reliability.

It should be noted that the counter-electrode insulating layer 1022 may cover the whole of the electrode active material layer 112 on the side surface 12 or 13. Specifically, the contours of the counter-electrode insulating layer 1022 may overlap a boundary between the electrode active material layer 112 and the electrode collector 111.

### (Manufacturing Method)

The following describes a method for manufacturing a battery according to each of the aforementioned embodiments.

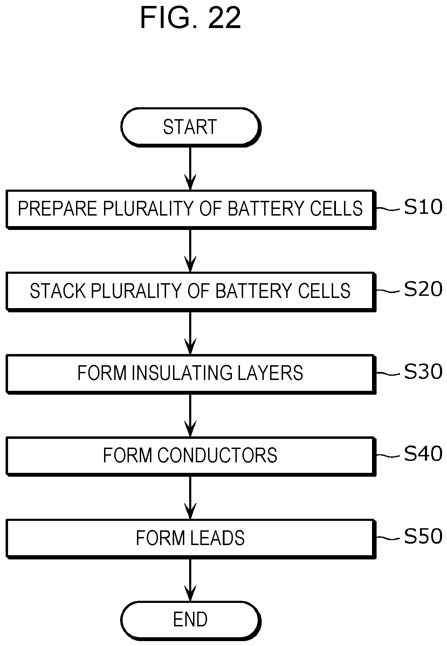

Fig. 22 is a flow chart showing an example of a method for manufacturing a battery according to each embodiment. In the following, an example of the battery 1 according to Embodiment 1 is described.

As shown in Fig. 22, first, a plurality of battery cells are prepared (S10). The battery cells thus prepared are for example battery cells 100A, 100B, and 100C shown in Figs. 3A to 3C.

Next, the plurality of battery cells 100 are laminated (S20). Specifically, a layered product is formed by laminating the plurality of battery cells 100 in sequence so that orders of arrangement of the electrode layer 110, the counter-electrode layer 120, and the solid electrolyte layer 130 alternate. In the present embodiment, a power-generating element 10 shown in Fig. 4 is formed by laminating an appropriate combination of battery cells 100A, 100B, and 100C. The power-generating element 10 is an example of the layered product.

After the plurality of battery cells 100 have been laminated, side surfaces of the power-generating element 10 may be planarized. For example, a power-generating element 10 whose side surfaces are flat can be formed by en-bloc cutting of the layered product composed of the plurality of battery cells 100. The cutting process is executed, for example, with a cutter, a laser, or a jet.

Next, insulating layers are formed on the side surfaces of the power-generating element 10 (S30). Specifically, an electrode insulating layer 21 is formed on each of the side surfaces 11 and 14 so as to cover the electrode layer 110. Further, a counter-electrode insulating layer 22 is formed on each of the side surfaces 12 and 13 so as to cover the counter-electrode layer 120. Further, an insulating layer 52 is formed on the principal surface 15.

The electrode insulating layer 21, the counter-electrode insulating layer 22, and the insulating layer 52 are formed, for example, by coating and curing of a fluid resin material. The coating is executed by an inkjet method, a spray method, a screen printing method, a gravure printing method, or other methods. The curing is executed by drying, heating, photoirradiation, or other processes, depending on the resin material used. Alternatively, the electrode insulating layer 21, the counter-electrode insulating layer 22, and the insulating layer 52 may be formed by bonding or joining an insulating plate or an insulating film to the side surface 11 or 12 or the principal surface 15.

In the formation of the electrode insulating layer 21, the counter-electrode insulating layer 22, and the insulating layer 52, a process of forming a protecting member through masking with a tape or other materials or through resist processing may be executed on a region in which an insulating layer should not be formed, in order that an end face of the counter-electrode collector 121 and an end face of the electrode collector 111 do not become insulated. The electrical conductivity of each collector can be ensured by removing the protecting member after the formation of the electrode insulating layer 21 and the counter-electrode insulating layer 22.

Next, conductors are formed at a principal surface of the power-generating element 10 (S40). Specifically, a counter-electrode conductor 41 and an electrode conductor 42 are formed at the principal surface 15.

For example, the counter-electrode conductor 41 and the electrode conductor 42 are formed by coating and curing of a conductive paste such as conductive resin in predetermined regions of the principal surface 15. Alternatively, the counter-electrode conductor 41 and the electrode conductor 42 may be formed, for example, by printing, plating, deposition, sputtering, welding, soldering, joining, or other methods.

Next, leads are formed on the side surfaces of the power-generating element 10 (S50). Specifically, a counter-electrode lead 31 electrically connected to a plurality of the counter-electrode layers 120 is formed so as to cover a central region of each of the side surfaces 11 and 14 and the electrode insulating layer 21. An electrode lead 32 that electrically connects a plurality of the electrode layers 110 is formed so as to cover a central region of each of the side surfaces 12 and 13 and the counter-electrode insulating layer 22. At this point in time, the counter-electrode lead 31 and the electrode lead 32 are not formed in corner regions of each side surface.

For example, the counter-electrode lead 31 is formed by coating and curing of a conductive paste such as conductive resin so as to cover, in a region of the side surface 11 or 14 other than the corner regions, i.e. the central region of each side surface, the electrode insulating layer 21 and a portion not covered with the electrode insulating layer 21. Further, the electrode lead 32 is placed by coating and curing of conductive resin so as to cover, in a region of the side surface 12 or 13 other than the corner regions, i.e. the central region of each side surface, the counter-electrode insulating layer 22 and a portion not covered with the counter-electrode insulating layer 22. Alternatively, the counter-electrode lead 31 and the electrode lead 32 may be formed, for example, by printing, plating, deposition, sputtering, welding, soldering, joining, or other methods.

Through these steps, a battery 1 shown in Figs. 1A to 1C can be manufactured.

Each separate one of the plurality of battery cells 100 prepared in step S10 or a laminated body of the plurality of battery cells may be subjected to a step of pressing them in the direction of laminating.

Further, for example, the formation of conductors (S40) may be preceded by the formation of leads (S50).

Further, for example, in the formation of insulating layers (S30), an electrode insulating layer 21 may be formed on each of the side surfaces 11 and 12, which face away from each other, and a counter-electrode insulating layer 22 may be formed on each of the side surfaces 13 and 14, which face away from each other. In this case, in the formation of conductors (S40), a counter-electrode conductor 341 is formed at either of the principal surfaces 15 and 16, and an electrode conductor 342 is formed at the other of the principal surfaces 15 and 16. Further, in the formation of leads (S50), counter-electrode leads 31 are formed on the side surfaces 11 and 12, which face away from each other, and electrode leads 32 are formed on the side surfaces 13 and 14, which face away from each other. In this way, a battery 301 shown in Figs. 10 and 11 can be manufactured.

Further, for example, in the formation of insulating layers (S30), an end insulating layer 220 or end insulating layers 451 and 452 may be formed. In a case where the end insulating layer 220 or the end insulating layers 451 and 452 are formed, the formation of conductors (S40) may involve forming a counter-electrode conductor 441 and an electrode conductor 442 to cover the end insulating layer 220 or the end insulating layers 451 and 452. In this way, a battery 401 shown in Fig. 12 can be manufactured.

Further, after the formation of a layered product (S20) and before the formation of leads (S50), first conductive members 531a and 532a shown in Fig. 13 may be formed. The first conductive members 531a and 532a may be formed, for example, by printing, plating, deposition, sputtering, welding, soldering, joining, or other methods.

Further, after the formation of a layered product (S20) or after the formation of insulating layers (S30), an end face recession process may be executed. Specifically, by causing end faces of the active material layers of the power-generating element 10 to recede, the collectors are caused to project further than the active material layers. More specifically, at the side surfaces 11 and 14 of the power-generating element 10, the counter-electrode collector 121, which is part of the counter-electrode layer 120, is caused to project further than the counter-electrode active material layer 122, which is another part of the counter-electrode layer 120.

The end face recession process involves, for example, grinding, sandblasting, brushing, etching, or plasma irradiation of the side surfaces 11 and 14. In this case, the electrode insulating layer 21 functions as a protecting member against each process. For example, in a case where the side surfaces 11 and 14 are sandblasted, a portion covered with the electrode insulating layer 21 is not ground, and a portion not covered with the electrode insulating layer 21 or, specifically, an end face of the counter-electrode layer 120 or other parts are ground into a recession. At this point in time, the counter-electrode active material layer 122 is removed more than the counter-electrode collector 121, as the counter-electrode active material layer 122 is brittler than the counter-electrode collector 121. This causes the counter-electrode active material layer 122 to recede further than the counter-electrode collector 121. That is, as shown in Fig. 20, a counter-electrode active material layer 922 with a receding end face is formed. In other words, the counter-electrode collector 121 projects further than counter-electrode active material layer 922.

Executing a similar process on the side surfaces 12 and 13 causes the electrode active material layer 112 to recede further than the electrode collector 111. That is, as shown in Fig. 20, an electrode active material layer 912 with a receding end face is formed. In other words, the electrode collector 111 projects further than electrode active material layer 912.

Further, for example, after the formation of leads (S40), a counter-electrode collector terminal 631 and an electrode collector terminal 632 may be formed at side surfaces of the power-generating element 10. The counter-electrode collector terminal 631 and the electrode collector terminal 632 are each formed by placing an electrically conductive material such as a metallic material in a desired region by plating, printing, soldering, thermal spraying, or other processes. Alternatively, the counter-electrode collector terminal 631 and the electrode collector terminal 632 may each be formed by welding or joining a metal plate.

Further, after the formation of leads (S50) or after the formation of collector terminals, a sealing member 760 may be formed. The sealing member 760 is formed, for example, by coating and curing of a fluid resin material. The coating is executed by an inkjet method, a spray method, a screen printing method, a gravure printing method, or other methods. The curing is executed by drying, heating, photoirradiation, or other processes, depending on the resin material used.

### (Other Embodiments)

In the foregoing, a battery and a method for manufacturing a battery according to one or more aspects have been described with reference to embodiments; however, the present disclosure is not intended to be limited to these embodiments. Applications to the present embodiments of various types of modification conceived of by persons skilled in the art and other embodiments constructed by combining some constituent elements of different embodiments are encompassed in the scope of the present disclosure, provided such applications and embodiments do not depart from the spirit of the present disclosure.

For example, although an example has been illustrated in which both the uppermost and lowermost layer of a power-generating element are counter-electrode layers, at least either the uppermost or lowermost layer may be an electrode layer. In this case, in a case where the electrode layer located at the uppermost layer or the lowermost layer is provided with a counter-electrode collector terminal, an insulating counter-electrode intermediate layer is needed between the electrode layer and the counter-electrode collector terminal. Meanwhile, in this case, no electrode intermediate layer needs to be provided between the counter-electrode layer and the electrode collector terminal.

Further, for example, although the foregoing embodiments have illustrated an example in which one collector is shared between adjacent battery cells, the collector does not need to be shared. Two counter-electrode collectors may be joined on top of each other, and two electrode collectors may be joined on top of each other.

Further, each of the foregoing embodiments is subject, for example, to various changes, substitutions, additions, and omissions in the scope of the claims or the scope of equivalents thereof.

### Industrial Applicability

The present disclosure is applicable to batteries for electronics, electrical appliances, electric vehicles, or other devices.

### Reference Signs List

1, 201, 301, 401, 501, 601, 701, 702, 801, 901, 1001 battery
10 power-generating element
11, 12, 13, 14 side surface
11a, 12a central region
11b, 12b corner region
15, 16 principal surface
21, 1021 electrode insulating layer
22, 1022 counter-electrode insulating layer
31, 531 counter-electrode lead
32, 532 electrode lead
41, 341, 441 counter-electrode conductor
42, 342, 442 electrode conductor
52, 351, 352 insulating layer
100, 100A, 100B, 100C, 800, 900 battery cell
110, 110B, 810, 910 electrode layer
111, 811 electrode collector
112, 912 electrode active material layer
120, 120C, 820, 920 counter-electrode layer
121, 821 counter-electrode collector
122, 922 counter-electrode active material layer
130, 930 solid electrolyte layer
220, 451, 452 end insulating layer
531a, 532a first conductive member
531b, 532b second conductive member
631 counter-electrode collector terminal
632 electrode collector terminal
760 sealing member
811a, 821a, 911a, 921a projecting portion

## Claims

1. A battery comprising:
a power-generating element including a plurality of battery cells each including an electrode layer, a counter-electrode layer, and a solid electrolyte layer located between the electrode layer and the counter-electrode layer, the plurality of battery cells being electrically connected in parallel and laminated;
an electrode insulating member covering the electrode layer on each of a plurality of first side surfaces of the power-generating element;
a plurality of counter-electrode leads, electrically connected to the counter-electrode layer, each of which covers a first region of a corresponding one of the plurality of first side surfaces excluding both ends in a direction orthogonal to a direction of laminating and the electrode insulating member; and
a counter-electrode conductor that connects the plurality of counter-electrode leads.

2. The battery according to claim 1, wherein the counter-electrode conductor is provided at a first principal surface of the power-generating element.

3. The battery according to claim 2, further comprising a first insulating layer disposed between the counter-electrode conductor and the first principal surface.

4. The battery according to any one of claims 1 to 3, further comprising:
a counter-electrode insulating member covering the counter-electrode layer on each of a plurality of second side surfaces of the power-generating element;
a plurality of electrode leads, electrically connected to the electrode layer, each of which covers a second region of a corresponding one of the plurality of second side surfaces excluding both ends in a direction orthogonal to the direction of laminating and the counter-electrode insulating member; and
an electrode conductor that connects the plurality of electrode leads.

5. The battery according to claim 4, wherein the counter-electrode conductor and the electrode conductor are provided at an identical principal surface of the power-generating element.

6. The battery according to claim 4 or 5, wherein the counter-electrode conductor and the electrode conductor are each provided at both two principal surfaces of the power-generating element.

7. The battery according to claim 4, wherein
the counter-electrode conductor is provided at a first principal surface of the power-generating element, and
the electrode conductor is provided at a second principal surface of the power-generating element opposite to the first principal surface.

8. The battery according to claim 4 or 7, wherein the plurality of first side surfaces and the plurality of second side surfaces are alternately arranged along a circumferential direction of the power-generating element.

9. The battery according to any one of claims 4 to 8, further comprising a second insulating layer disposed between the electrode conductor and the power-generating element.

10. The battery according to any one of claims 1 to 7, wherein the plurality of first side surfaces are side surfaces adjacent to each other.

11. The battery according to any one of claims 1 to 10, further comprising an end insulating member covering both ends of each of the plurality of first side surfaces in a direction orthogonal to the direction of laminating.

12. The battery according to claim 1, wherein
the plurality of first side surfaces are side surfaces adjacent to each other,
the battery further comprises an end insulating member covering connected portions of the first side surfaces adjacent to each other,
the electrode insulating member further covers both ends of each of the plurality of first side surfaces in a direction orthogonal to the direction of laminating, and
the counter-electrode conductor covers the end insulating member.

13. The battery according to any one of claims 1 to 12, further comprising a counter-electrode collector terminal disposed at the plurality of first side surfaces and connected to each of the counter-electrode leads.

14. The battery according to any one of claims 1 to 13, wherein
the counter-electrode layer includes
a counter-electrode collector, and
a counter-electrode active material layer located between the counter-electrode collector and the solid electrolyte layer,
at the plurality of first side surfaces, the counter-electrode collector projects further than the counter-electrode active material layer, and
each of the counter-electrode leads makes contact with a principal surface of the counter-electrode collector.

15. The battery according to any one of claims 1 to 14, wherein
the electrode insulating member covers the electrode layer of each of the plurality of battery cells on the plurality of first side surfaces, and
each of the counter-electrode leads is electrically connected to the counter-electrode layer of each of the plurality of battery cells.

16. The battery according to any one of claims 1 to 15, wherein the electrode insulating member has a striped shape in a planar view of one of the plurality of first side surfaces.

17. The battery according to any one of claims 1 to 16, wherein each of the counter-electrode leads includes a first conductive member that makes contact with the counter-electrode layer and a second conductive member covering the first conductive member.

18. The battery according to any one of claims 1 to 17, wherein the electrode insulating member contains resin.

19. The battery according to any one of claims 1 to 18, further comprising a sealing member that exposes at least part of each of the counter-electrode leads and seals the power-generating element.

20. A method for manufacturing a battery, the method comprising the steps of:
preparing a plurality of battery cells each including an electrode layer, a counter-electrode layer, and a solid electrolyte layer located between the electrode layer and the counter-electrode layer;
forming a layered product by laminating the plurality of battery cells in sequence so that an order of arrangement of the electrode layer, the counter-electrode layer, and the solid electrolyte layer of every one of the plurality of battery cells and an order of arrangement of the electrode layer, the counter-electrode layer, and the solid electrolyte layer of another of the plurality of battery cells alternate;
covering the electrode layer with an electrode insulating member on each of the plurality of first side surfaces of the layered product;
covering, with each of a plurality of counter-electrode leads electrically connected to the counter-electrode layer, a first region of a corresponding one of the plurality of first side surfaces excluding both ends in a direction orthogonal to a direction of laminating and the electrode insulating member; and
providing a counter-electrode conductor that connects the plurality of counter-electrode leads.
